# EUROPEAN PATENT APPLICATION

(11) **EP 4 779 243 A1**
(43) Date of publication of application: **22.07.2026**
(21) Application number: 25871194.4
(22) Date of filing: 24.09.2025
(51) Int. Cl.: F25D 23/00, A01F 25/00, A23B 2/708, A23B 7/148, A23B 9/20, F25D 11/00

(54) **AIR COMPOSITION REGULATING DEVICE AND REFRIGERATION DEVICE**

(30) Priority: 27.09.2024 JP 2024169393; 27.09.2024 JP 2024169394
(71) Applicant: Daikin Industries, Ltd., Osaka-shi, Osaka 530-0001 (JP)
(72) Inventor: NISHIYAMA Kota, Osaka-shi, Osaka 530-0001 (JP); HIRATA Wataru, Osaka-shi, Osaka 530-0001 (JP); IKEMIYA Makoto, Osaka-shi, Osaka 530-0001 (JP)
(74) Representative: Hoffmann Eitle
(86) International application number: PCT/JP2025/033566
(87) International publication number: WO 2026/070849

(57) **Abstract**

An air composition adjustment device adjusts a composition of air in an internal space (5) of a container (1), the air composition adjustment device including a composition adjuster (200) that supplies, to the internal space (5), a gas to be treated having a composition different from a composition of external air generated by treating the external air, a control unit (110) that controls the composition adjuster (200), and a first pressure detector (170) that detects a pressure in the internal space (5), in which the composition adjuster (200) includes a conveyor (231a, 231b) that conveys the external air or the gas to be treated to the internal space (5), and the control unit (110) evaluates airtightness of the internal space (5) on the basis of a change in the pressure in the internal space (5) caused by operation of the conveyor (231a, 231b).

## Description

### TECHNICAL FIELD

The present disclosure relates to an air composition adjustment device and a refrigeration apparatus.

### BACKGROUND ART

Patent Literature 1 discloses a transport container. The transport container includes a transport refrigeration apparatus. The transport refrigeration apparatus cools air in an internal space of the container. The transport container includes an air composition adjustment device that adjusts a composition of internal air. The air composition adjustment device adjusts an oxygen concentration and a carbon dioxide concentration of the internal air.

### CITATION LIST

### PATENT LITERATURE

Patent Literature 1: JP 2018-148877 A

### SUMMARY OF THE INVENTION

### TECHNICAL PROBLEM

Cargo such as fruits and vegetables and flowers is loaded in the internal space of the transport container. In order to maintain the freshness of fruits and flowers during transportation, the oxygen concentration and the carbon dioxide concentration in the internal space are adjusted. Therefore, the airtightness of the internal space is evaluated by using a device such as a compressor. However, in a case where the airtightness of the internal space is evaluated by using such a device, the timing and place for the evaluation of the airtightness are limited. That is, it is necessary to perform the evaluation before the cargo is loaded into the transport container, or it is necessary to perform the evaluation at a place where the device is disposed. Therefore, it is preferable to evaluate the airtightness of the internal space even during the operation of the air composition adjustment device.

An object of the present disclosure is to provide an air composition adjustment device capable of evaluating airtightness of an internal space even during operation of the air composition adjustment device.

### SOLUTION TO THE PROBLEM

A first aspect is an air composition adjustment device that adjusts a composition of air in an internal space (5) of a container (1), the air composition adjustment device including
a composition adjuster (200) that supplies, to the internal space (5), a gas to be treated having a composition different from a composition of external air generated by treating the external air,
a control unit (110) that controls the composition adjuster (200), and
a first pressure detector (170) that detects a pressure in the internal space (5), in which
the composition adjuster (200) includes a conveyor (231a, 231b) that conveys the external air or the gas to be treated to the internal space (5), and
the control unit (110) evaluates airtightness of the internal space (5) on the basis of a change in the pressure in the internal space (5) caused by operation of the conveyor (231a, 231b).

In the first aspect, the airtightness of the internal space (5) can be evaluated by using the conveyor (231a, 231b) capable of confirming the flow rate of the gas flowing into the internal space (5). Therefore, since a device such as an external compressor for evaluating the airtightness is unnecessary, it is possible to suppress restriction of a place and timing for evaluating the airtightness. In particular, since the airtightness of the internal space (5) can also be evaluated during transportation of the container (1), the airtightness of the internal space (5) can be evaluated even in a state where cargo is loaded in the internal space (5).

In a second aspect, in the first aspect,
the control unit (110) obtains an airtightness index that is an index indicating the airtightness of the internal space (5).

In the second aspect, the airtightness of the internal space (5) can be evaluated relatively easily by using the airtightness index.

In a third aspect, in the second aspect,
the control unit (110) determines the airtightness of the internal space (5) on the basis of the airtightness index.

In the third aspect, the airtightness of the internal space (5) can be determined by using the airtightness index. Accordingly, for example, in a case where the airtightness is significantly low, the internal air cannot be maintained at a predetermined temperature, and the internal air cannot be maintained at an adjusted predetermined air composition. In such a case, since the container (1) cannot be used for transportation of cargo such as fruit or vegetable, it is possible to promptly determine whether the transport container can be used and whether the transport container (1) needs to be repaired by determining the airtightness of the internal space (5).

In a fourth aspect, in the second aspect,
the control unit (110) determines whether the air composition adjustment device is operable on the basis of the airtightness index.

In the fourth aspect, by using the airtightness index, it is possible to determine whether the air composition adjustment device is operable. As a result, it is possible to perform normal transportation in which only refrigeration or freezing is performed without using the air composition adjustment device as long as the airtightness is high enough to maintain the internal space (5) at a predetermined temperature by the operation of the transport refrigeration apparatus.

In a fifth aspect, in the fourth aspect,
the container (1) includes a refrigeration apparatus (10) that cools internal air of the internal space (5), and
the control unit (110) determines whether the refrigeration apparatus (10) is operable on the basis of the airtightness index.

In the fifth aspect, in addition to the determination as to whether the air composition adjustment device of the fourth aspect is operable, it is also possible to determine whether the refrigeration apparatus is operable.

In a sixth aspect, in any one of the first to fifth aspects,
the first pressure detector (170) includes a differential pressure sensor that detects a differential pressure between the external air and the internal air.

In the sixth aspect, in a case where the pressure of the external air is set to a standard atmospheric pressure, the pressure of the internal space (5) can be detected by the differential pressure.

A seventh aspect further includes, in any one of the second to fifth aspects,
a second pressure detector (180) that detects a pressure of the external air, in which
the control unit (110) obtains the airtightness index on the basis of detection values of the first pressure detector (170) and the second pressure detector (180).

In a seventh aspect, a change in an internal pressure of the container (1) is affected by the pressure of the external air. Therefore, by using the pressure value of the external air, the accuracy of the evaluation of the airtightness of the internal space (5) can be improved.

In an eighth aspect, in any one of the second to seventh aspects,
the control unit (110) obtains the airtightness index on the basis of the pressure of the internal space (5) in a first period in which the conveyor (231a, 231b) is controlled so as to maintain the pressure of the internal space (5) in a predetermined range.

In the eighth aspect, in a state where the internal pressure is kept constant, it can be considered that the inflow amount and the outflow amount of the gas are equal. This can be used to evaluate the airtightness of the internal space (5) when the internal pressure is constant.

A ninth aspect further includes, in the eighth aspect,
a fan (35) that circulates air in the internal space (5), in which
the control unit (110) obtains the airtightness index on the basis of the pressure in the internal space (5) during a period in which a wind speed of the fan (35) is in a steady state in the first period.

In the ninth aspect, a change in the wind speed of the fan (35) temporarily changes a pressure value in the internal space (5). In particular, in a state where the pressure in the internal space (5) is constant, an influence of the change in the wind speed of the fan (35) is great. Therefore, a more accurate airtightness index can be obtained by obtaining the airtightness index during the period in which the wind speed of the fan (35) is in the steady state.

In a tenth aspect, in the eighth or ninth aspect,
the control unit (110) executes a first mode for introducing the external air into the internal space (5) without changing the composition of the external air, and
the first period is a period during execution of the first mode.

In the tenth aspect, the airtightness index can be obtained during execution of the first mode.

In an eleventh aspect, in the eighth or ninth aspect,
the control unit (110) executes a second mode for introducing the gas to be treated into the internal space (5), and
the first period is a period during execution of the second mode.

In the eleventh aspect, the airtightness index can be obtained by a constant pressure method during execution of the second mode.

In a twelfth aspect, in the eleventh aspect,
the control unit (110) obtains the airtightness index on the basis of a flow rate of the gas to be treated that is supplied to the internal space (5).

In the twelfth aspect, since the flow rate of the gas to be treated can be confirmed by the operation of the conveyor (231a, 231b), the airtightness index can be obtained by the flow rate.

In a thirteenth aspect, in any one of the first to seventh aspects,
the control unit (110) controls the conveyor (231a, 231b) to perform a pressure boosting action of increasing the pressure in the internal space (5), and evaluates the airtightness of the internal space (5) on the basis of a change in the pressure detected by the first pressure detector (170) during the pressure boosting action.

In the thirteenth aspect, the airtightness of the internal space (5) can be evaluated even in a state where the internal pressure increases.

In a fourteenth aspect, in any one of the first to seventh aspects,
the control unit (110) controls the conveyor (231a, 231b) to perform a decompression action of reducing the pressure of the internal space (5), and evaluates the airtightness of the internal space (5) on the basis of a change in the pressure detected by the first pressure detector (170) during the decompression action.

In the fourteenth aspect, the airtightness of the internal space (5) can be evaluated even in a state where the internal pressure decreases.

In a fifteenth aspect, in the thirteenth or fourteenth aspect,
the control unit (110) performs a switching action of switching a plurality of operating modes executed by the air composition adjustment device, and evaluates the airtightness of the internal space (5) on the basis of the change in the pressure detected by the first pressure detector (170) when the operating mode is switched by the switching action.

In the fifteenth aspect, the pressure of the internal space (5) changes when the operating mode is switched. The airtightness of the internal space (5) can be evaluated by using the change in the internal pressure.

In a sixteenth aspect, in the fifteenth aspect,
the operating mode includes a first mode for introducing the external air into the internal space (5) without changing the composition of the external air, a second mode for introducing the gas to be treated generated by treating the external air into the internal space (5), and a third mode for stopping the operation of the conveyor (231a, 231b), and
the control unit (110) evaluates the airtightness of the internal space (5) on the basis of an increasing change in the pressure detected by the first pressure detector (170) when the second mode is switched to the first mode or the third mode is switched to the first mode.

In the sixteenth aspect, in a case where the operating mode is switched to increase the internal pressure, the airtightness of the internal space (5) can be evaluated.

In a seventeenth aspect, in the fifteenth aspect,
the operating mode includes a first mode for introducing the external air into the internal space (5) without changing the composition of the external air, a second mode for introducing the gas to be treated generated by treating the external air into the internal space (5), and a third mode for stopping the operation of the conveyor (231a, 231b), and
the control unit (110) evaluates the airtightness of the internal space (5) on the basis of a decreasing change in the pressure detected by the first pressure detector (170) when the first mode is switched to the third mode or the second mode is switched to the third mode.

In the seventeenth aspect, in a case where the operating mode is switched to decrease the internal pressure, the airtightness of the internal space (5) can be evaluated.

In an eighteenth aspect, in any one of the second to seventeenth aspects,
the container (1) is provided with a ventilation port (41, 42) that causes the internal space (5) to communicate with the external space and an opening and closing lid (45) that adjusts an opening degree of the ventilation port (41, 42), and
the control unit (110) evaluates the opening degree of the ventilation port (41, 42) on the basis of the airtightness index.

In the eighteenth aspect, the opening degree of the opening and closing lid (45) can be determined on the basis of the airtightness index. As a result, it is possible to confirm whether the opening and closing lid (45) is normally acting.

In a nineteenth aspect, in any one of the first to eighteenth aspects,
the control unit (110) evaluates the airtightness of the internal space (5) during transportation of the container (1).

In the nineteenth aspect, it is not necessary to evaluate the airtightness of the internal space (5) before collected cargo is transported. As a result, the airtightness of the internal space (5) can be evaluated even in a state where the collected cargo is loaded on the container, and thus, the airtightness of the internal space (5) can be evaluated at a desired timing without considering a place and time.

In a twentieth aspect, in any one of the first to nineteenth aspects,
the control unit (110) obtains the airtightness index that is an index indicating the airtightness of the internal space (5), and
estimates a first flow rate that is a flow rate of gas supplied to the internal space (5) on the basis of the airtightness index and an internal pressure during the operation of the conveyor (231a, 231b).

In the twentieth aspect, since the flow rate of the gas supplied to the internal space (5) can be estimated, a sensor or the like for measurement can be eliminated. Therefore, it is possible to suppress an increase in the number of parts and an increase in cost due to attachment of the sensor as described above.

In a twenty-first aspect, in the twentieth aspect,
the conveyor (231a, 231b) includes a first conveyor (231a) that conveys the external air to the internal space (5) and a second conveyor (231b) that conveys the gas to be treated having the composition different from the composition of the external air to the internal space (5), and
the first flow rate is the flow rate of the gas to be treated conveyed to the internal space (5) by the second conveyor (231b).

In the twenty-first aspect, it is possible to estimate the flow rate of the gas to be treated conveyed to the internal space (5) by the decompression-side pump (231b) during the operation of the air composition adjustment device (100).

In a twenty-second aspect, in the twenty-first aspect,
the control unit (110) estimates the first flow rate on the basis of the airtightness index when the first conveyor (231a) supplies the external air to the internal space (5).

In the twenty-second aspect, the first flow rate of the gas conveyed to the internal space (5) by the second conveyor (231b) can be estimated by using the airtightness index when the external air is introduced into the internal space (5) by the first conveyor (231a).

In a twenty-third aspect, in the twenty-first or twenty-second aspect,
the air composition adjustment device (100) executes the first mode for introducing the external air into the internal space (5) without changing the composition of the external air, and the second mode for introducing the gas to be treated into the internal space (5), and
the control unit (110) estimates the first flow rate in a process of sequentially executing the first mode and the second mode.

In the twenty-third aspect, in the operation in which the air composition adjustment device (100) sequentially performs the first mode and the second mode, since the airtightness index of the internal space (5) can be obtained by executing the first mode, the first flow rate of the gas can be estimated in the subsequent second mode by using the airtightness index.

In a twenty-fourth aspect, in the twentieth or twenty-third aspect,
the control unit (110) evaluates an abnormality of the conveyor (231a, 231b) on the basis of the first flow rate having been estimated.

In the twenty-fourth aspect, in a case where the estimated value of the first flow rate is different from a preset value of the flow rate, it can be determined that the conveyor (231a, 231b) has not normally conveyed the gas to the internal space (5). In other words, it is possible to confirm that there is an abnormality in the conveyor (231a, 231b). In this manner, it is not necessary to periodically perform maintenance on the conveyor (231a, 231b), and it is sufficient to perform part replacement or repair when an abnormality can be confirmed in the conveyor (231a, 231b), and thus, the maintenance cost can be suppressed.

A twenty-fifth aspect is a refrigeration apparatus including
the air composition adjustment device according to any one of the twentieth to twenty-fourth aspects, and
a refrigerant circuit (11) that cools the internal space (5).

A twenty-sixth aspect can provide a refrigeration apparatus capable of estimating the flow rate of gas flowing into the internal space (5). In particular, in a case where the cargo of the container (1) is fresh food, it is necessary to manage the air composition in addition to managing the temperature of the internal space (5). Therefore, the estimation of the flow rate of gas flowing into the internal space (5) is useful for transporting such cargo.

### BRIEF DESCRIPTION OF THE DRAWINGS

FIG. 1 is a schematic perspective view of a transport refrigeration apparatus according to a first embodiment.
FIG. 2 is a sectional view of a transport container including the transport refrigeration apparatus according to the first embodiment.
FIG. 3 is a piping system diagram showing a refrigerant circuit of the transport refrigeration apparatus according to the first embodiment.
FIG. 4 is a schematic front view of a ventilator. FIG. 4(A) shows a state in which an opening and closing lid is at a closed position, FIG. 4(B) shows a state in which the opening and closing lid is at an intermediate position, and FIG. 4(C) shows a state in which the opening and closing lid is at a fully open position.
FIG. 5 is a piping system diagram showing a configuration of an air composition adjustment device according to the first embodiment.
FIG. 6 is a diagram corresponding to FIG. 5 and showing the air composition adjustment device that performs a first action of a gas supply action.
FIG. 7 is a diagram corresponding to FIG. 5 and showing the air composition adjustment device that performs a second action of the gas supply action.
FIG. 8 is a diagram corresponding to FIG. 5 and showing an air composition adjustment device that performs an outside air introduction action.
FIG. 9 is a block diagram showing a configuration of a control unit included in the air composition adjustment device according to the first embodiment.
FIG. 10 is a table showing timings of actions in an oxygen concentration 8% mode.
FIG. 11 is a table showing timings of actions in an oxygen concentration 5% mode.
FIG. 12 is a flowchart, a timing chart, and an equation for describing a first airtight measurement mode.
FIG. 13 is a flowchart, a timing chart, and an equation for describing a second airtight measurement mode.
FIG. 14 is a flowchart, a timing chart, and an equation for describing a third airtight measurement mode.
FIG. 15 is a flowchart for describing an action for determining airtightness of an internal space.
FIG. 16 is a diagram showing a transition of a pressure change in the internal space in an example of an operation of the transport refrigeration apparatus.
FIG. 17 is a diagram showing a transition of the pressure change in the internal space in an example of an operation of the air composition adjustment device.
FIG. 18 is a flowchart for describing an action for determining an opening degree of a ventilation port of a ventilator.
FIG. 19 is a diagram corresponding to FIG. 2 and showing a transport container of Modification 1.

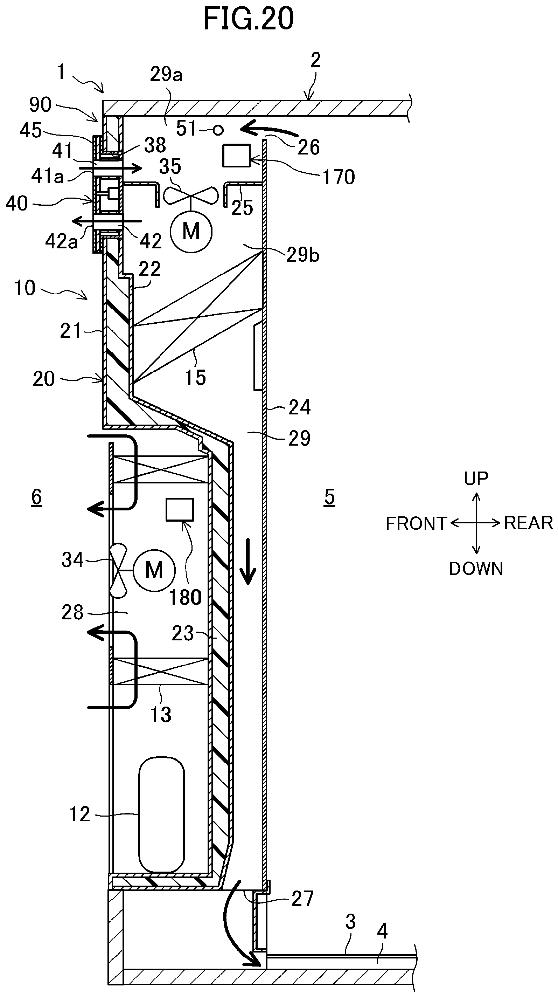

FIG. 20 is a diagram corresponding to FIG. 2 and showing a transport container of Modification 2.
FIG. 21 is a block diagram corresponding to FIG. 9 and showing a configuration of a control unit included in an air composition adjustment device according to a second embodiment.
FIG. 22 is a flowchart for describing an abnormality determination action of an air pump according to the second embodiment.

### DESCRIPTION OF EMBODIMENTS

### (1) (First embodiment)

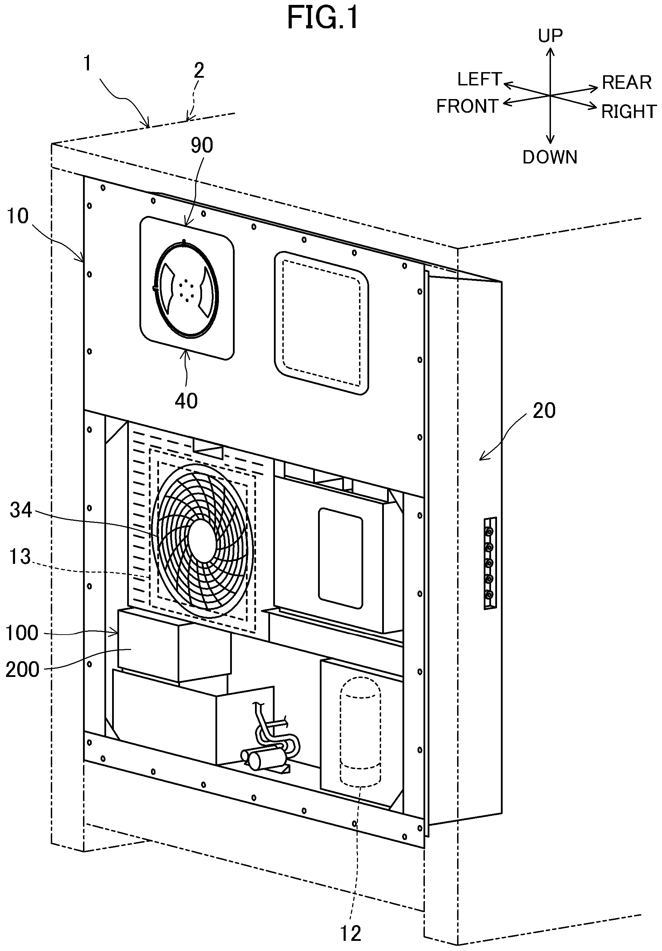

Hereinafter, a first embodiment of the present disclosure will be described with reference to the drawings. In the following description, phrases related to the terms "front", "rear", "up", "down", "right", and "left" are based on the directions indicated by the arrows in FIG. 1.

The present disclosure is a transport container (1). The transport container (1) is a reefer container capable of managing an internal temperature. This transport container (1) is used for transporting breathable fresh produce (for example, fruits, vegetables, flowers, and the like) that takes in oxygen (O₂) in the air and releases carbon dioxide (CO₂). The transport container (1) is an example of a container (1).

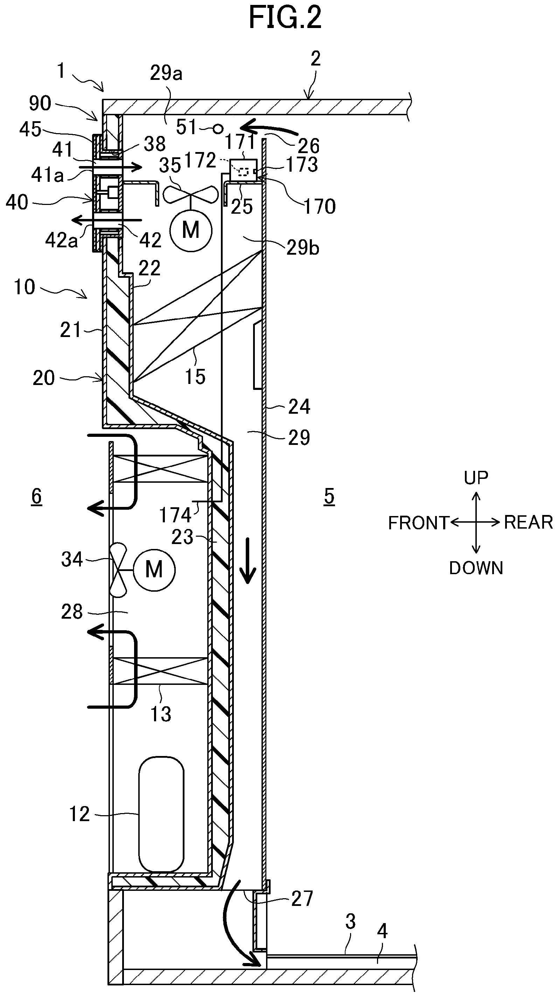

As shown in FIGS. 1 and 2, the transport container (1) includes a container body (2) and a transport refrigeration apparatus (10). The transport refrigeration apparatus (10) is attached to the container body (2). The transport container (1) is used for marine transportation. The transport container (1) is conveyed by a marine vehicle such as a ship.

The container body (2) is a storage for storing the above-described fresh produce.

The container body (2) has a hollow box shape. The container body (2) is horizontally long. An opening is formed at one end of the container body (2) in a longitudinal direction. The opening of the container body (2) is closed by a transport refrigeration apparatus (10). In the container body (2), an internal space (5) for storing cargo, which is fresh produce, is formed.

A floor plate (3) for loading cargo is disposed at a bottom of the internal space (5). An underfloor flow path (4) for allowing air blown out by the transport refrigeration apparatus (10) to flow is formed between the floor plate (3) and a bottom plate of the container body (2). The underfloor flow path (4) is a flow path extending in the longitudinal direction of the container body (2) along the bottom plate of the container body (2). The underfloor flow path (4) has one end connected to a blow-out port (27) of the transport refrigeration apparatus (10) and the other end that communicates with a space above the floor plate (3) (that is, a space in which the cargo is accommodated).

### (2) Basic configuration of transport refrigeration apparatus

A transport refrigeration apparatus (10) includes, as a refrigeration cycle apparatus, a casing (20), a refrigerant circuit (11) that performs a refrigeration cycle, an external fan (34), and an internal fan (35). The transport refrigeration apparatus (10) is an example of the refrigeration apparatus (10).

### (2-1) Casing

The casing (20) includes an external wall (21), an internal wall (22), a back plate (24), and a partitioning plate (25). As described later, the casing (20) is provided with the refrigerant circuit (11), the external fan (34), and the internal fan (35).

The external wall (21) is a plate-shaped member disposed so as to cover an opening end of the container body (2). A lower portion of the external wall (21) bulges toward inside of the container body (2). The internal wall (22) is a plate-shaped member extending along the external wall (21). The internal wall (22) is disposed so as to cover an inner surface of the container body (2) in the external wall (21). A space between the external wall (21) and the internal wall (22) is filled with a heat insulating material (23).

A lower portion of the casing (20) is recessed toward the inside of the container body (2). The lower portion of the casing (20) forms an external device chamber (28) communicating with an outer space of the transport container (1). The external fan (34) is disposed in the external device chamber (28).

The back plate (24) is a substantially rectangular flat plate-shaped member. The back plate (24) is disposed inside the container body (2) with respect to the internal wall (22), and forms an internal air flow path (29) with the internal wall (22). An upper end of the internal air flow path (29) constitutes a suction port (26) of the casing (20), and a lower end of the internal air flow path constitutes a blow-out port (27) of the casing (20).

The partitioning plate (25) is a plate-shaped member disposed so as to partition the internal air flow path (29) into an upper portion and a lower portion. The partitioning plate (25) is disposed in the upper portion of the internal air flow path (29). The partitioning plate (25) partitions the internal air flow path (29) into a primary flow path (29a) above the partitioning plate (25) and a secondary flow path (29b) below the partitioning plate (25). The primary flow path (29a) communicates with the internal space (5) via the suction port (26). The secondary flow path (29b) communicates with the underfloor flow path (4) via the blow-out port (27). The internal fan (35) is attached to the partitioning plate (25). The internal fan (35) is disposed so as to blow air sucked from the primary flow path (29a) to the secondary flow path (29b). In this manner, the internal fan (35) circulates air inside the internal space (5). The internal fan (35) is an example of a fan (35).

### (2-2) Refrigerant circuit

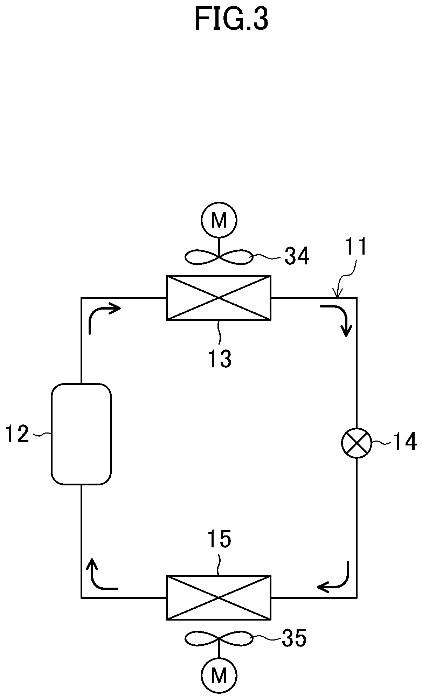

As shown in FIG. 3, the refrigerant circuit (11) is a closed circuit formed by connecting a compressor (12), an external heat exchanger (13), an expansion valve (14), and an internal heat exchanger (15) with pipes. When the compressor (12) is activated, a refrigerant circulates in the refrigerant circuit (11), and a vapor compression refrigeration cycle is performed. As shown in FIG. 2, the external heat exchanger (13) is disposed in the external device chamber (28), and the internal heat exchanger (15) is disposed in the secondary flow path (29b) of the internal air flow path (29). The compressor (12) is disposed in the external device chamber (28).

### (2-3) Operation and action of transport refrigeration apparatus

The transport refrigeration apparatus (10) performs a cooling operation for cooling internal air of the transport container (1).

In the cooling operation, the compressor (12) of the refrigerant circuit (11) is activated, and the refrigerant circulates in the refrigerant circuit (11) to perform a vapor compression refrigeration cycle. In the refrigerant circuit (11), the refrigerant discharged from the compressor (12) passes through the external heat exchanger (13), the expansion valve (14), and the internal heat exchanger (15) in that order, and is then sucked into the compressor (12) to be compressed.

During the cooling operation, the external fan (34) and the internal fan (35) are activated. When the external fan (34) is activated, external air outside the transport container (1) is sucked into the external device chamber (28) and passes through the external heat exchanger (13). In the external heat exchanger (13), the refrigerant radiates heat to the external air and condenses. When the internal fan (35) is activated, the internal air in the internal space (5) of the transport container (1) is sucked into the internal air flow path (29) and passes through the internal heat exchanger (15). In the internal heat exchanger (15), the refrigerant absorbs heat from the internal air and evaporates.

The flow of the internal air will be described. The internal air existing in the internal space (5) flows into the primary flow path (29a) of the internal air flow path (29) through the suction port (26), and is blown out to the secondary flow path (29b) by the internal fan (35). The internal air that has flowed into the secondary flow path (29b) is cooled when passing through the internal heat exchanger (15), is then blown out from the blow-out port (27) into the underfloor flow path (4), and flows into the internal space (5) through the underfloor flow path (4).

In the internal air flow path (29), the primary flow path (29a) is located on a suction side of the internal fan (35), and the secondary flow path (29b) is located on a blow-out side of the internal fan (35). During the activation of the internal fan (35), therefore, the air pressure in the secondary flow path (29b) is slightly higher than the air pressure in the primary flow path (29a).

### (3) Ventilator

A transport refrigeration apparatus (10) includes a ventilator (40). The ventilator (40) ventilates the internal space (5) of the container body (2). The ventilator (40) has an air supply function of supplying the external air to the internal space (5) and an air exhaust function of exhausting the internal air to the external space (6).

### (3-1) (Configuration of ventilator)

As shown in FIG. 1, the ventilator (40) is disposed in an upper left portion of the casing (20) of the transport refrigeration apparatus (10). As shown in FIG. 2, the ventilator (40) is provided in a ventilation attachment port (38) formed in the casing (20). The ventilation attachment port (38) penetrates the casing (20) in a front-rear direction.

As shown in FIG. 2, an air supply passage (41) and an air exhaust passage (42) are formed inside the ventilator (40). The air supply passage (41) and the air exhaust passage (42) cause the internal space (5) and the external space (6) to communicate with each other. The air supply passage (41) and the air exhaust passage (42) provided in the transport container are examples of ventilation ports (41 and 42).

Specifically, the air supply passage (41) causes the primary flow path (29a) of the internal air flow path (29) to communicate with the external space (6). An end of the air supply passage (41) closer to the external space (6) is an air supply communication port (41a). The air supply communication port (41a) is an air introduction port that causes the external space (6) to communicate with the inside of the container body (2). The air exhaust passage (42) causes the secondary flow path (29b) of the internal air flow path (29) to communicate with the external space (6). An end of the air exhaust passage (42) closer to the external space (6) is an air exhaust communication port (42a). The air supply communication port (41a) and the air exhaust communication port (42a) are slightly elongated openings extending in a circumferential direction.

The ventilator (40) includes an opening and closing lid (45). The opening and closing lid (45) is a disk-shaped member. The opening and closing lid (45) is provided so as to cover the air supply communication port (41a) and the air exhaust communication port (42a). The opening and closing lid (45) is driven by a motor (not shown) and is rotatable around a center axis of the opening and closing lid.

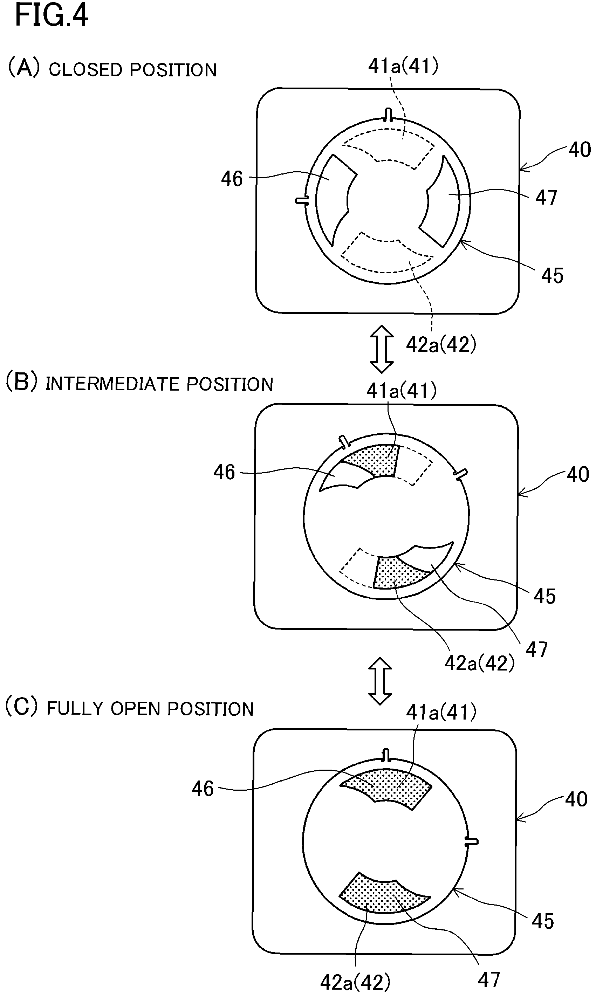

As shown in FIG. 4, in the opening and closing lid (45), an air supply opening (46) and an air exhaust opening (47) are formed. Each of the air supply opening (46) and the air exhaust opening (47) penetrates the opening and closing lid (45) in a thickness direction. The shape of the air supply opening (46) is the same as the shape of the air supply communication port (41a). The shape of the air exhaust opening (47) is the same as the shape of the air exhaust communication port (42a). In the opening and closing lid (45), the air supply opening (46) and the air exhaust opening (47) are formed at positions such that the entire air exhaust opening (47) overlaps the air exhaust communication port (42a) when the entire air supply opening (46) overlaps the air supply communication port (41a). The opening and closing lid (45) provided in the transport container (1) as described above adjusts opening degrees of the air supply passage (41) and the air exhaust passage (42).

### (3-2) (Action of ventilator)

The ventilator (40) is configured to adjust a flow rate (supply air flow rate) of the external air supplied to the internal space (5) and a flow rate (exhaust air flow rate) of the internal air exhausted from the internal space (5) by rotationally moving the opening and closing lid (45).

Specifically, when the opening and closing lid (45) is rotationally moved, an area of a portion of the air supply communication port (41a) overlapping the air supply opening (46) and an area of a portion of the air exhaust communication port (42a) overlapping the air exhaust opening (47) change. The external air flows into the air supply passage (41) through the portion of the air supply communication port (41a) overlapping the air supply opening (46), and then flows into the internal space (5). The internal air flowing through the air exhaust passage (42) flows out to the external space (6) through the portion of the air exhaust communication port (42a) overlapping the air exhaust opening (47).

When the area of the portion of the air supply communication port (41a) overlapping the air supply opening (46) is increased, the supply air flow rate is increased, and when the area of the portion is decreased, the supply air flow rate is decreased. When the area of the portion of the air exhaust communication port (42a) overlapping the air exhaust opening (47) is increased, the exhaust air flow rate is increased, and when the area of the portion is decreased, the exhaust air flow rate is decreased.

When the opening and closing lid (45) is located at the position shown in FIG. 4(A), the entire air supply communication port (41a) is covered with the opening and closing lid (45), and the entire air exhaust communication port (42a) is covered with the opening and closing lid (45). Therefore, each of the area of a portion of the air supply communication port (41a) overlapping the air supply opening (46) and the area of a portion of the air exhaust communication port (42a) overlapping the air exhaust opening (47) becomes zero. Thus, the air supply passage (41) and the air exhaust passage (42) are fully closed. That is, in this state, each of the supply air flow rate and the exhaust air flow rate becomes zero.

When the opening and closing lid (45) is located at the position shown in FIG. 4(C), the entire air supply communication port (41a) overlaps the air supply opening (46), and the entire air exhaust communication port (42a) overlaps the air exhaust opening (47). Therefore, the area of the portion of the air supply communication port (41a) overlapping the air supply opening (46) (a portion denoted by a dot in FIG. 4(C)) and the area of the portion of the air exhaust communication port (42a) overlapping the air exhaust opening (47) (a portion denoted by a dot in FIG. 4(C)) are maximum. That is, the air supply passage (41) and the air exhaust passage (42) are fully opened. Therefore, in this state, each of the supply air flow rate and the exhaust air flow rate becomes a maximum flow rate.

When the opening and closing lid (45) is located at the position shown in FIG. 4(B), a part of the air supply communication port (41a) overlaps the air supply opening (46), and a part of the air exhaust communication port (42a) overlaps the air exhaust opening (47). Therefore, the area of the portion of the air supply communication port (41a) overlapping the air supply opening (46) (a portion denoted by a dot in FIG. 4(B)) and the area of the portion of the air exhaust communication port (42a) overlapping the air exhaust opening (47) (a portion denoted by a dot in FIG. 4(B)) become intermediate areas smaller than the maximum areas. Therefore, in this state, each of the supply air flow rate and the exhaust air flow rate becomes an intermediate flow rate larger than zero and smaller than the maximum flow rate.

### (4) Air composition adjustment device

An air composition adjustment device (100) treats air, which is the external air, to generate a gas to be treated having a composition different from a composition of the external air. The air composition adjustment device (100) supplies the external air and the gas to be treated, which are gases, to the internal space (5).

### (4-1) Basic configuration of air composition adjustment device

The air composition adjustment device (100) is provided in the transport refrigeration apparatus (10) in order to perform so-called controlled atmosphere (CA) transportation. The air composition adjustment device (100) adjusts the composition of air in the internal space (5) of the transport container (1).

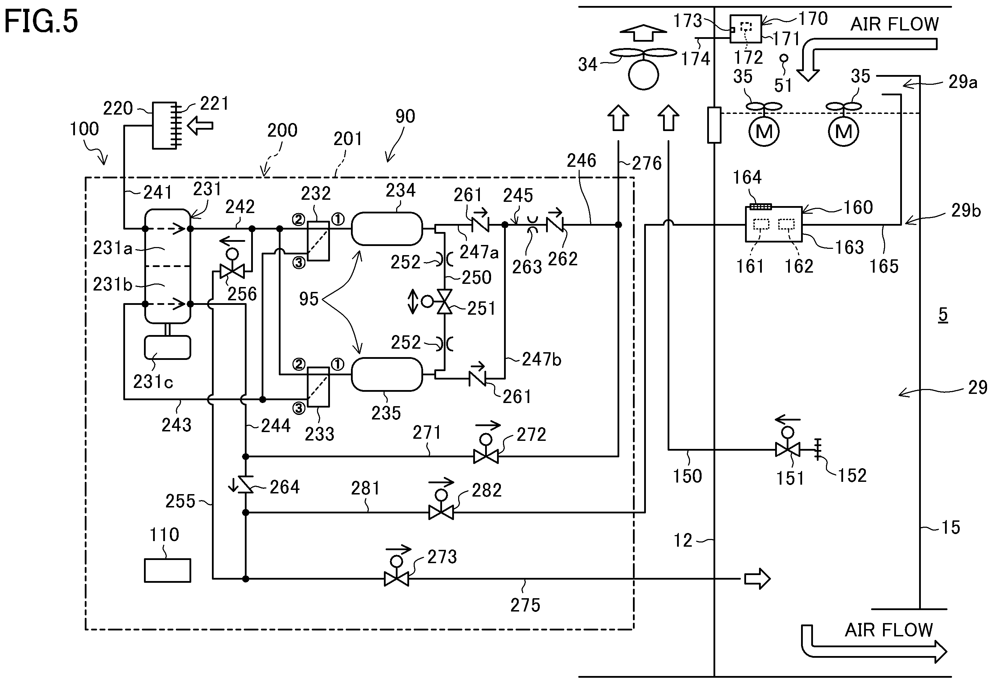

As shown in FIG. 5, the air composition adjustment device (100) includes a filter unit (220), a body unit (200), a gas supply pipe (275), a gas exhaust pipe (276), a sensor unit (160), and a ventilation exhaust pipe (150). The air composition adjustment device (100) is a so-called pressure swing adsorption (PSA) type gas separator.

### (4-2) Filter unit and outside air pipe

The filter unit (220) is a member formed in a box shape. The filter unit (220) is installed in the external device chamber (28) of the transport refrigeration apparatus (10). The filter unit (220) includes an air filter (221). The air filter (221) is a filter for capturing dust, salt, and the like contained in the external air. The air filter (221) according to the present embodiment is a membrane filter having air permeability and waterproofness.

The filter unit (220) is connected to the body unit (200) through the outside air pipe (241). One end of the outside air pipe (241) is connected to the filter unit (220). The other end of the outside air pipe (241) is connected to an air pump (231) described later. The outside air pipe (241) guides the external air (atmosphere) that has passed through the air filter (221) to the air pump (231).

### (4-3) body unit

The body unit (200) treats air, which is the external air, to generate a gas to be treated having a composition different from the composition of the external air. The air composition adjustment device (100) supplies the generated gas to be treated to the internal space (5) of the container body (2). Specifically, the air composition adjustment device (100) separates the external air into a nitrogen-enriched gas having a higher nitrogen concentration and a lower oxygen concentration than the external air and an oxygen-enriched gas having a lower nitrogen concentration and a higher oxygen concentration than the external air. The body unit (200) is an example of a composition adjuster (200).

The body unit (200) is installed in the external device chamber (28) of the transport refrigeration apparatus (10). The body unit (200) includes the air pump (231), a first adsorption cylinder (234), a second adsorption cylinder (235), a first switching valve (232), a second switching valve (233), and a unit case (201) that accommodates these components. An introduction pipe (242), a suction pipe (243), a first gas pipe (244), and a second gas pipe (245) are accommodated in the unit case (201).

### (4-4) Air pump

The air pump (231) is an example of a conveyor. The air pump (231) supplies gas to the internal space (5) of the transport container (1). The air pump (231) includes a compression-side pump (231a), a decompression-side pump (231b), and a drive motor (231c). Each of the compression-side pump (231a) and the decompression-side pump (231b) sucks and discharges air. The compression-side pump (231a) and the decompression-side pump (231b) are connected to a drive shaft of one drive motor (231c). In the air pump (231), both the compression-side pump (231a) and the decompression-side pump (231b) are driven by one drive motor (231c). The air pump (231) conveys the external air and the gas to be treated to the internal space (5).

The other end of the outside air pipe (241) is connected to a suction port of the compression-side pump (231a). One end of the introduction pipe (242) is connected to a discharge port of the compression-side pump (231a). The compression-side pump (231a) supplies the air to be treated sucked from the outside air pipe (241) to the first adsorption cylinder (234) and the second adsorption cylinder (235) through the introduction pipe (242).

The suction pipe (243) is connected to a suction port of the decompression-side pump (231b). The first gas pipe (244) is connected to a discharge port of the decompression-side pump (231b). The decompression-side pump (231b) discharges the gas sucked from the first adsorption cylinder (234) and the second adsorption cylinder (235) through the suction pipe (243) to the first gas pipe (244).

### (4-5) Introduction pipe

The introduction pipe (242) is a pipe that guides the air to be treated discharged from the compression-side pump (231a) to the first adsorption cylinder (234) and the second adsorption cylinder (235). The one end of the introduction pipe (242) is connected to a discharge port of the compression-side pump (231a). The introduction pipe (242) branches into two branch pipes at the other end, and one branch pipe is connected to the first switching valve (232) and the other branch pipe is connected to the second switching valve (233).

### (4-6) Suction pipe

The suction pipe (243) is a pipe that guides the gas flowing out of the first adsorption cylinder (234) and the second adsorption cylinder (235) to the decompression-side pump (231b). One end of the suction pipe (243) is connected to a suction port of the decompression-side pump (231b). The suction pipe (243) branches into two branch pipes at the other end, and one branch pipe is connected to the first switching valve (232) and the other branch pipe is connected to the second switching valve (233).

### (4-7) First gas pipe

The first gas pipe (244) is a pipe through which the nitrogen-enriched gas discharged from the decompression-side pump (231b) flows. One end of the first gas pipe (244) is connected to a discharge port of the decompression-side pump (231b). The other end of the first gas pipe (244) is connected to the gas supply pipe (275).

The first gas pipe (244) is provided with a check valve (264). The check valve (264) allows only the flow of the gas in a direction from the one end to the other end of the first gas pipe (244) and blocks the flow of the gas in the opposite direction.

### (4-8) Switching valve

Each of the first switching valve (232) and the second switching valve (233) is a switching valve including three ports. Each of the first switching valve (232) and the second switching valve (233) is configured to switch between a first state (a state shown by a solid line in FIG. 3) in which a first port communicates with a second port and is blocked from a third port, and a second state (a state shown by a broken line in FIG. 3) in which the first port communicates with the third port and is blocked from the second port.

The first port of the first switching valve (232) is connected to one end of the first adsorption cylinder (234). In the first switching valve (232), the branch pipe of the introduction pipe (242) is connected to the second port, and the branch pipe of the suction pipe (243) is connected to the third port. The first switching valve (232) switches the first adsorption cylinder (234) between a state of being connected to the compression-side pump (231a) and a state of being connected to the decompression-side pump (231b).

The first port of the second switching valve (233) is connected to one end of the second adsorption cylinder (235). In the second switching valve (233), the branch pipe of the introduction pipe (242) is connected to the second port, and the branch pipe of the suction pipe (243) is connected to the third port. The second switching valve (233) switches the second adsorption cylinder (235) between a state of being connected to the compression-side pump (231a) and a state of being connected to the decompression-side pump (231b).

### (4-9) adsorption cylinder

Each of the first adsorption cylinder (234) and the second adsorption cylinder (235) is a member including a cylindrical container whose both ends are closed and an adsorbent filled in the container. The adsorption cylinders (234 and 235) separate the air to be treated (in the present embodiment, the external air) into an oxygen-enriched gas and a nitrogen-enriched gas by using the adsorbent.

The adsorbent filled in the adsorption cylinders (234 and 235) has a property of adsorbing nitrogen and water (water vapor) in the air to be treated in a compressed state where the pressure is higher than an atmospheric pressure, and desorbing nitrogen and water in a decompressed state where the pressure is lower than the atmospheric pressure. An example of the adsorbent having such properties is porous zeolite having pores with a pore diameter smaller than a molecular diameter of nitrogen molecules (3.0 angstroms) and larger than a molecular diameter of oxygen molecules (2.8 angstroms).

The first adsorption cylinder (234) and the second adsorption cylinder (235) constitute an air treatment unit (95) together with the first switching valve (232) and the second switching valve (233).

### (4-10) Second gas pipe

The second gas pipe (245) includes a main pipe (246), a first branch (247a), and a second branch (247b). The second gas pipe (245) constitutes a second passage through which the oxygen-enriched gas flows. The first branch (247a) is a pipe that connects the other end of the first adsorption cylinder (234) to one end of the main pipe (246). The second branch (247b) is a pipe that connects the other end of the second adsorption cylinder (235) to the one end of the main pipe (246). One check valve (261) is provided in each of the first branch (247a) and the second branch (247b). Each check valve (261) allows a flow of air in a direction flowing out from the corresponding adsorption cylinder (234 or 235) and blocks a flow of air in the opposite direction.

As described above, the first branch (247a) and the second branch (247b) are connected to the one end of the main pipe (246). The other end of the main pipe (246) is connected to the gas exhaust pipe (276) described later. The main pipe (246) is provided with an orifice (263) and a check valve (262) in order from the one end to the other end of the main pipe. The check valve (262) allows a flow of air from the one end to the other end of the main pipe (246) and blocks a flow of air in the opposite direction.

### (4-11) Purge pipe

A purge pipe (250) is connected to each of the first branch (247a) and the second branch (247b) of the second gas pipe (245). The purge pipe (250) has one end connected to the first branch (247a) and the other end connected to the second branch (247b). The one end of the purge pipe (250) is connected between the first adsorption cylinder (234) and the check valve (261) in the first branch (247a). The other end of the purge pipe (250) is connected between the second adsorption cylinder (235) and the check valve (261) in the second branch (247b).

The purge pipe (250) is provided with a purge valve (251). The purge valve (251) is an on-off valve including an electromagnetic valve. The purge valve (251) is opened when the first adsorption cylinder (234) and the second adsorption cylinder (235) are equalized in pressure. One orifice (252) is provided on each side of the purge valve (251) in the purge pipe (250).

### (4-12) Exhaust connection pipe

An exhaust connection pipe (271) is connected to the first gas pipe (244). The exhaust connection pipe (271) has one end connected to the first gas pipe (244) and the other end connected to the second gas pipe (245). The one end of the exhaust connection pipe (271) is connected between the decompression-side pump (231b) and the check valve (264) in the first gas pipe (244). The other end of the exhaust connection pipe (271) is connected to one end of the gas exhaust pipe (276).

The exhaust connection pipe (271) is provided with a gas exhaust valve (272). The gas exhaust valve (272) is an on-off valve including an electromagnetic valve. When the gas exhaust valve (272) is opened, the nitrogen-enriched gas flowing through the first gas pipe (244) is exhausted to the outside of the container body (2).

### (4-13) Gas supply pipe

As described above, the first gas pipe (244) is connected to one end of the gas supply pipe (275). The gas supply pipe (275) extends to the outside of the unit case (201). The other end of the gas supply pipe (275) opens to downstream of the internal fan (35) in the internal air flow path (29) of the transport refrigeration apparatus (10). The gas supply pipe (275) is a pipe for introducing the gas flowing in from the one end into the container body (2).

The gas supply pipe (275) is provided with a gas supply valve (273). The gas supply valve (273) is an on-off valve including an electromagnetic valve.

### (4-14) Gas exhaust pipe

As described above, the main pipe (246) of the second gas pipe (245) and the exhaust connection pipe (271) are connected to the one end of the gas exhaust pipe (276). The gas exhaust pipe (276) extends to the outside of the unit case (201). The other end of the gas exhaust pipe (276) opens to the external device chamber (28) of the transport container (1). The gas exhaust pipe (276) is a pipe for exhausting the gas flowing in from the one end to the outside of the container body (2).

### (4-15) Measurement pipe

A measurement pipe (281) is connected to the first gas pipe (244). The measurement pipe (281) is a pipe that connects the first gas pipe (244) to the sensor unit (160). One end of the measurement pipe (281) is connected to downstream of the check valve (264) in the first gas pipe (244). The other end of the measurement pipe (281) is connected to the sensor unit

(160).

The measurement pipe (281) is provided with a measurement on-off valve (282). The measurement on-off valve (282) is an on-off valve including an electromagnetic valve. The measurement on-off valve (282) is opened when air flowing through the first gas pipe (244) is sent to the sensor unit (160).

### (4-16) Bypass pipe

A bypass connection pipe (255) is connected to the introduction pipe (242). The bypass connection pipe (255) is a pipe for supplying the external air to the internal space (5) of the transport container (1) by bypassing the first adsorption cylinder (234) and the second adsorption cylinder (235). One end of the bypass connection pipe (255) is connected between a branching point of the introduction pipe (242) and the compression-side pump (231a). The other end of the bypass connection pipe (255) is connected to the one end of the gas supply pipe (275).

The bypass connection pipe (255) is provided with a bypass valve (256). The bypass valve (256) is an on-off valve including an electromagnetic valve. The bypass valve (256) is opened when the external air discharged from the compression-side pump (231a) is supplied to the internal space (5) without changing the composition of the external air.

### (4-17) Sensor unit

The sensor unit (160) includes an oxygen sensor (161), a carbon dioxide sensor (162), and a sensor case (163). The sensor unit (160) is a detector that detects a concentration of a component of the internal air. The sensor unit (160) is provided in the secondary flow path (29b) of the internal air flow path (29).

The oxygen sensor (161) is, for example, a zirconia current type sensor that measures an oxygen concentration of a mixed gas such as air. The carbon dioxide sensor (162) is, for example, a non-dispersive infrared (NDIR) sensor that measures the concentration of carbon dioxide in a mixed gas such as air. The oxygen sensor (161) and the carbon dioxide sensor (162) are accommodated in the sensor case (163).

The sensor case (163) is a box-shaped member. The sensor case (163) includes an air filter (164). The air filter (164) is a membrane filter for capturing dust and the like contained in the internal air. The air filter (164) filters the internal air flowing into the sensor case (163).

The measurement pipe (281) is connected to the sensor case (163). An outlet pipe (165) is connected to the sensor case (163). The outlet pipe (165) has an inlet end connected to the sensor case (163) and an outlet end opening upstream of the internal fan (35) in the internal air flow path (29). The outlet end of the outlet pipe (165) opens to the primary flow path (29a) of the internal air flow path (29).

In a case where the measurement on-off valve (282) is closed, the internal air flows inside the sensor case (163). Specifically, the internal air flowing through the secondary flow path (29b) of the internal air flow path (29) flows into the sensor case (163) through the air filter (164), flows through the outlet pipe (165) after passing through the sensor case (163), and flows into the primary flow path (29a) of the internal air flow path (29). Therefore, in a case where the measurement on-off valve (282) is closed, the oxygen sensor (161) measures the oxygen concentration of the internal air, and the carbon dioxide sensor (162) measures the carbon dioxide concentration of the internal air.

On the other hand, in a case where the measurement on-off valve (282) is open, the gas flowing through the measurement pipe (281) flows inside the sensor case (163). Specifically, gas flowing through the first gas pipe (244) or the bypass connection pipe (255) flows into the sensor case (163) through the measurement pipe (281), flows through the outlet pipe (165) after passing through the sensor case (163), and flows into the primary flow path (29a) of the internal air flow path (29). Therefore, in a case where the measurement on-off valve (282) is open, the oxygen sensor (161) measures the oxygen concentration of the gas flowing into the sensor case (163) from the measurement pipe (281), and the carbon dioxide sensor (162) measures the carbon dioxide concentration of the gas flowing into the sensor case (163) from the measurement pipe (281).

### (4-18) Ventilation exhaust pipe

The ventilation exhaust pipe (150) is a pipe for exhausting the internal air of the transport container (1) to the external space. The ventilation exhaust pipe (150) penetrates the external wall (21) and the internal wall (22) of the transport refrigeration apparatus (10). The ventilation exhaust pipe (150) is provided with a ventilation exhaust valve (151). The ventilation exhaust valve (151) is an on-off valve including an electromagnetic valve.

### (4-19) Differential pressure sensor and internal temperature sensor

The air composition adjustment device (100) includes a differential pressure sensor (170) as a first pressure detector (pressure detector). The differential pressure sensor (170) is used for detecting pressure in the internal space (5). The differential pressure sensor (170) detects a differential pressure (ΔP) between an internal pressure (Pi) of the internal space (5) and an external pressure (Po) of the external space (6).

As shown in FIGS. 2 and 5, the differential pressure sensor (170) is disposed in the internal space (5). Specifically, the differential pressure sensor (170) is disposed in the primary flow path (29a) of the internal air flow path (29). The differential pressure sensor (170) includes a body case (171), a sensor portion (172) disposed inside the body case (171), an internal communication passage (173) that causes the inside of the body case (171) to communicate with the internal space (5), and an external communication passage (174) that causes the inside of the body case (171) to communicate with the external space (6). The differential pressure sensor (170) is an example of the first pressure detector of the present disclosure.

The internal communication passage (173) is configured by a communication hole formed in the body case (171). The internal communication passage (173) according to the present embodiment opens toward the primary flow path (29a). Specifically, the internal communication passage (173) opens toward the primary flow path (29a) so as to face a side opposite to a suction side of the internal fan (35). This configuration prevents a detection value of the differential pressure sensor (170) from being affected by a dynamic pressure of the internal air flowing through the internal air flow path (29). The external communication passage (174) is formed inside a tube. The tube extends from the body case (171) to the external space (6). The differential pressure sensor (170) detects a differential pressure ΔP between the internal space (5) and the external space (6).

The air composition adjustment device (100) includes an internal temperature sensor (51). The internal temperature sensor (51) detects a temperature of the internal air. The internal temperature sensor (51) is disposed in the primary flow path (29a) of the internal air flow path (29).

### (5) Operation and action of air composition adjustment device

### (5-1) Gas supply action

The air composition adjustment device (100) performs a gas supply action. The gas supply action is an action of generating a nitrogen-enriched gas by treating the external air and supplying the nitrogen-enriched gas to the internal space (5). In the gas supply action, the ventilation exhaust valve (151) is opened.

In the gas supply action, the air composition adjustment device (100) alternately repeats a first action and a second action. The air composition adjustment device (100) alternately repeats the first action and the second action for a predetermined switching time (for example, 14 seconds). As a result, the external air is separated into the nitrogen-enriched gas and the oxygen-enriched gas in the air treatment unit (95) of the air composition adjustment device (100).

### (5-1-1) First action

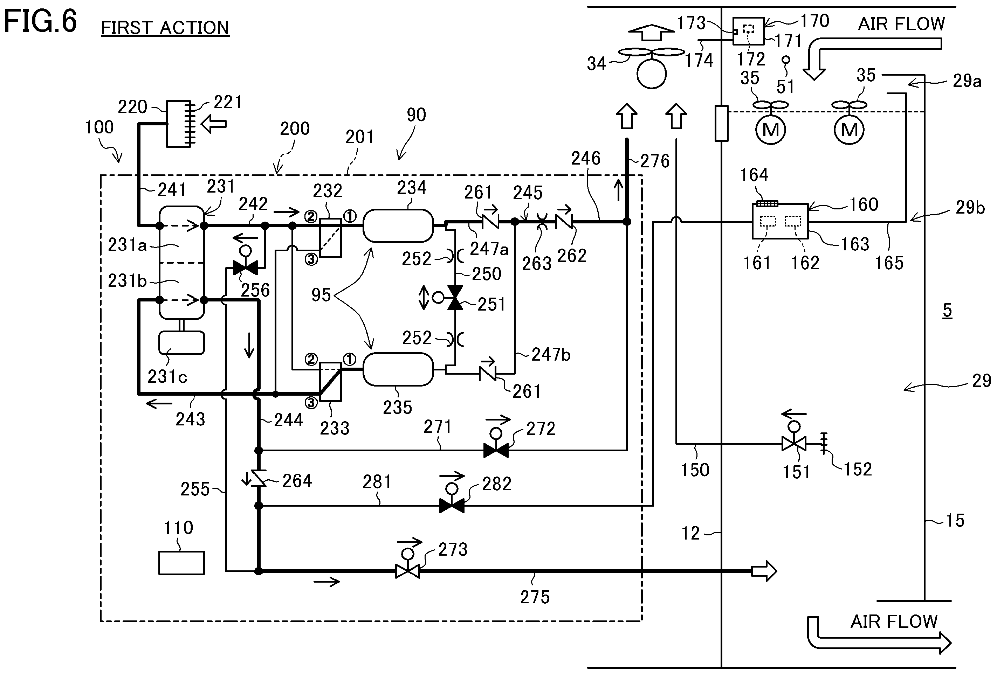

As shown in FIG. 6, in the first action, the first switching valve (232) is set to the first state, and the second switching valve (233) is set to the second state. In the first action, the purge valve (251), the bypass valve (256), and the measurement on-off valve (282) are held closed. In the first action, the air pump (231) is activated, and an adsorption action for the first adsorption cylinder (234) and a desorption action for the second adsorption cylinder (235) are performed.

The compression-side pump (231a) sucks the external air (atmosphere) from the outside air pipe (241) to compress the external air, and supplies the compressed external air to the first adsorption cylinder (234). In the first adsorption cylinder (234), nitrogen and water (water vapor) contained in the supplied external air are adsorbed by the adsorbent. As a result, in the first adsorption cylinder (234), an oxygen-enriched gas having a lower nitrogen concentration and a higher oxygen concentration than the external air is generated. The oxygen-enriched gas flows out from the first adsorption cylinder (234) to the first branch (247a) of the second gas pipe (245), and then is exhausted to the external space (6) through the gas exhaust pipe (276).

Meanwhile, the decompression-side pump (231b) sucks the gas from the second adsorption cylinder (235). In the second adsorption cylinder (235), the pressure inside the second adsorption cylinder decreases, and nitrogen and water are desorbed from the adsorbent. As a result, in the second adsorption cylinder (235), a nitrogen-enriched gas having a higher nitrogen concentration and a lower oxygen concentration than the external air is generated. The nitrogen-enriched gas flows into the suction pipe (243) from the second adsorption cylinder (235) and is sucked into the decompression-side pump (231b). The decompression-side pump (231b) compresses and discharges the sucked nitrogen-enriched gas to the first gas pipe (244). The nitrogen-enriched gas flowing through the first gas pipe (244) is supplied to the internal space (5) through the gas supply pipe (275). In this manner, the decompression-side pump (231b) is an example of the second conveyor (231b) that conveys the gas to be treated having a composition different from the composition of the external air to the internal space (5).

### (5-1-2) Second action

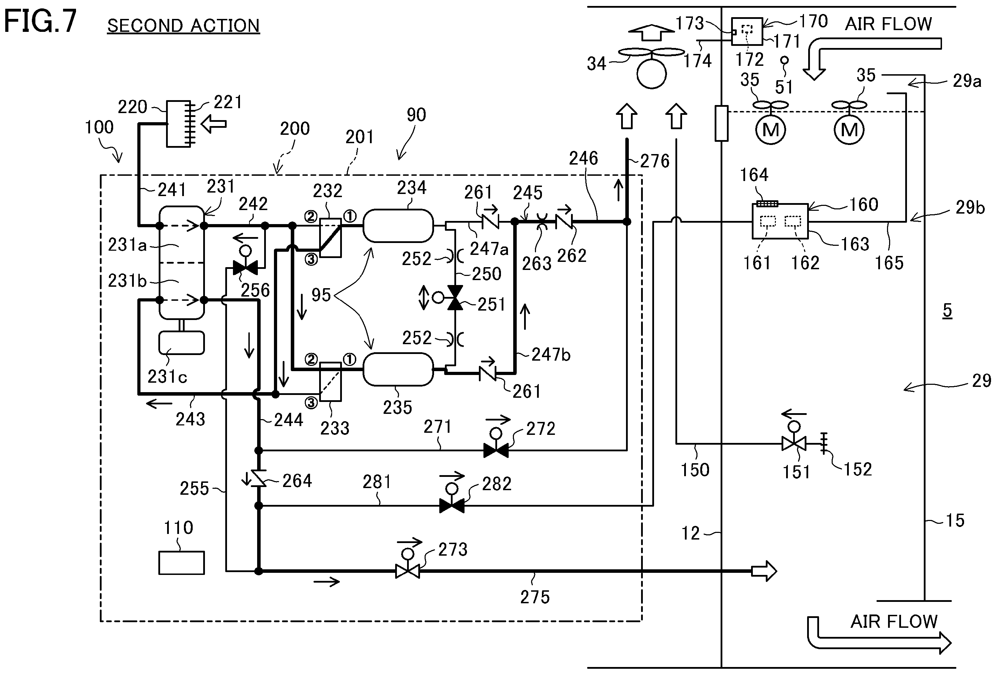

As shown in FIG. 7, in the second action, the first switching valve (232) is set to the second state, and the second switching valve (233) is set to the first state. In the second action, the purge valve (251), the bypass valve (256), and the measurement on-off valve (282) are held closed. Then, in the second action, the air pump (231) is activated, and a desorption action for the first adsorption cylinder (234) and an adsorption action for the second adsorption cylinder (235) are performed.

The compression-side pump (231a) sucks the external air (atmosphere) from the outside air pipe (241) to compress the external air, and supplies the compressed external air to the second adsorption cylinder (235). In the second adsorption cylinder (235), nitrogen and water (water vapor) contained in the supplied external air are adsorbed by the adsorbent. As a result, in the second adsorption cylinder (235), an oxygen-enriched gas having a lower nitrogen concentration and a higher oxygen concentration than the external air is generated. The oxygen-enriched gas flows out from the second adsorption cylinder (235) to the second branch (247b) of the second gas pipe (245), and then is exhausted to the external space (6) through the gas exhaust pipe (276).

Meanwhile, the decompression-side pump (231b) sucks the gas from the first adsorption cylinder (234). In the first adsorption cylinder (234), the pressure inside the first adsorption cylinder decreases, and nitrogen and water are desorbed from the adsorbent. As a result, in the first adsorption cylinder (234), a nitrogen-enriched gas having a higher nitrogen concentration and a lower oxygen concentration than the external air is generated. The nitrogen-enriched gas flows into the suction pipe (243) from the first adsorption cylinder (234) and is sucked into the decompression-side pump (231b). The decompression-side pump (231b) compresses and discharges the sucked nitrogen-enriched gas to the first gas pipe (244). The nitrogen-enriched gas flowing through the first gas pipe (244) is supplied to the internal space (5) through the gas supply pipe (275). In this manner, the decompression-side pump (231b) is an example of the second conveyor (231b) that conveys the gas to be treated having a composition different from the composition of the external air to the internal space (5).

### (5-2) Outside air introduction action

The air composition adjustment device (100) performs an outside air introduction action. The outside air introduction action is an action of supplying the external air, which is atmosphere, to the internal space (5) directly without changing the composition of the external air.

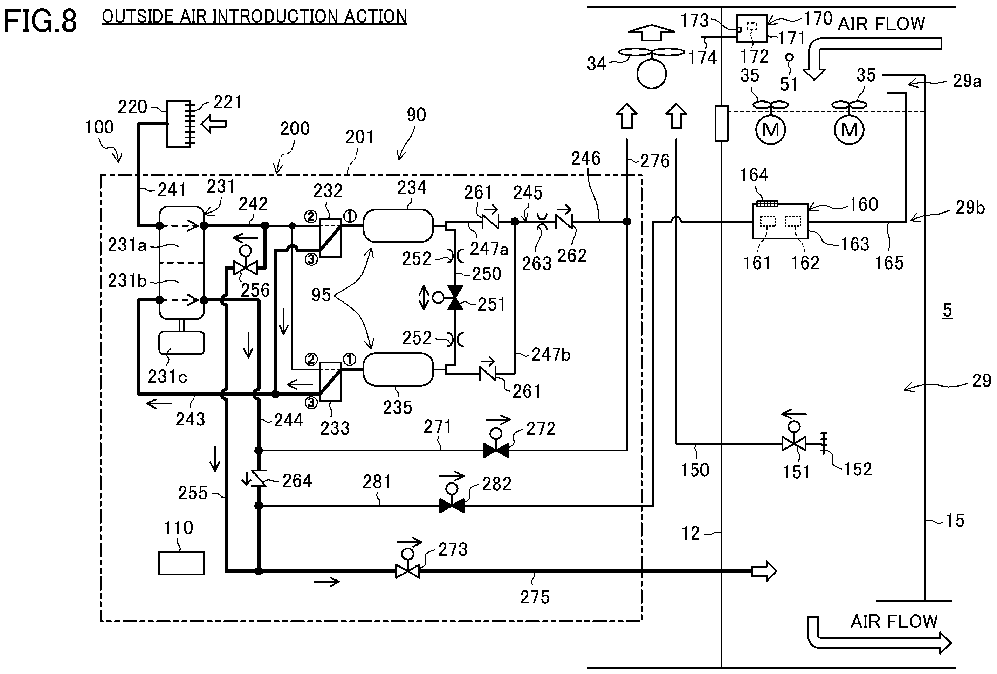

As shown in FIG. 8, in the outside air introduction action, both the first switching valve (232) and the second switching valve (233) are set to the second state. In the outside air introduction action, the gas supply valve (273) and the bypass valve (256) are held open, and the remaining on-off valves (251, 272, and 282) are held closed. In the outside air introduction action, the air pump (231) is activated, and the ventilation exhaust valve (151) is opened.

The compression-side pump (231a) sucks the external air (atmosphere) from the outside air pipe (241) to compress the external air, and discharges the compressed external air to the introduction pipe (242). The external air discharged from the compression-side pump (231a) flows through the introduction pipe (242), the bypass connection pipe (255), and the gas supply pipe (275) in that order, and is supplied to the internal air flow path (29). In this manner, in the outside air introduction action, air having the same composition as the atmosphere is supplied to the internal space (5) of the transport container (1). In this manner, the compression-side pump (231a) is an example of a first conveyor that conveys the external air to the internal space (5).

The decompression-side pump (231b) sucks gas from both the first adsorption cylinder (234) and the second adsorption cylinder (235), and discharges the sucked gas to the first gas pipe (244). The gas discharged from the decompression-side pump (231b) to the first gas pipe (244) flows into the gas supply pipe (275), and is supplied to the internal air flow path (29) together with the external air flowing into the gas supply pipe (275) from the bypass connection pipe (255).

When the decompression-side pump (231b) sucks the gas from the first adsorption cylinder (234) and the second adsorption cylinder (235), the pressures of the first adsorption cylinder (234) and the second adsorption cylinder (235) gradually decrease. When the duration of the outside air introduction action exceeds a certain period of time (for example, 45 seconds), the flow rate of the gas sucked by the decompression-side pump (231b) becomes substantially zero.

### (6) Control unit

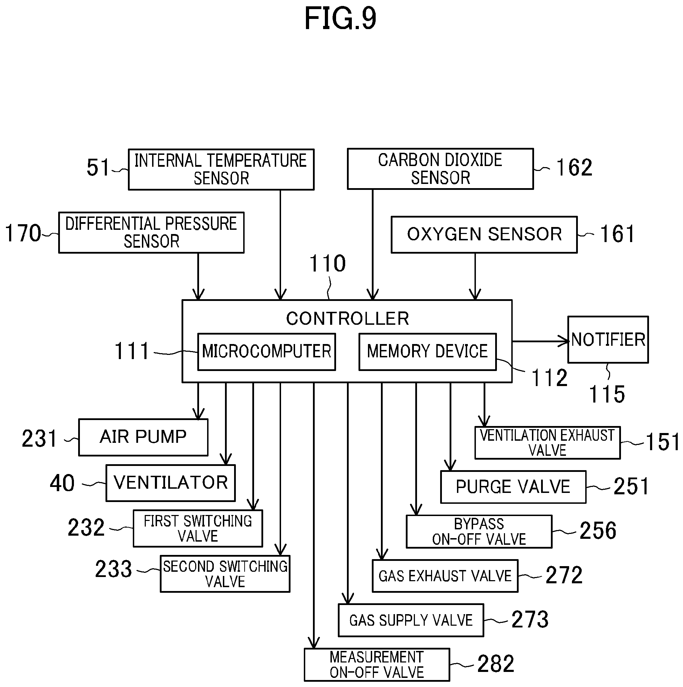

The air composition adjustment device (100) includes a control unit (110). As shown in FIG. 9, the control unit (110) includes a microcomputer (111) mounted on a control board, and a memory device (112) that stores software for operating the microcomputer (111). The memory device (112) is a semiconductor memory.

The control unit (110) controls components of the air composition adjustment device (100). The control unit (110) controls the body unit (200). Measured values of the oxygen sensor (161) and the carbon dioxide sensor (162) are input to the control unit (110). The control unit (110) controls the air pump (231), the first switching valve (232), and the second switching valve (233). The control unit (110) controls the ventilation exhaust valve (151), the purge valve (251), the bypass valve (256), the gas exhaust valve (272), the gas supply valve (273), and the measurement on-off valve (282). The control unit (110) outputs predetermined information to a notifier (115). The notifier (115) is provided in the transport refrigeration apparatus (10). The notifier (115) displays or issues predetermined information on the basis of a signal input from the control unit (110).

The control unit (110) controls the ventilator (40). Specifically, the control unit (110) adjusts the opening degrees of the air supply communication port (41a) and the air exhaust communication port (42a) by rotationally moving the opening and closing lid (45) of the ventilator (40). When the opening degree of the air supply communication port (41a) is changed, the flow rate of the external air supplied to the internal space (5) through the air supply passage (41) changes. When the opening degree of the air exhaust communication port (42a) is changed, the flow rate of the internal air exhausted to the external space (6) through the air exhaust passage (42) changes.

The control unit (110) evaluates airtightness of the internal space (5) on the basis of the change in pressure in the internal space (5) caused by operation of the air pump (231). Details of the evaluation of airtightness will be described later.

### (7) Operating mode

Operating modes of the air composition adjustment device (100) will be described. The control unit (110) causes the air composition adjustment device (100) to execute four operating modes. These operating modes include an oxygen concentration 8% mode, an oxygen concentration 5% mode, an outside air introduction mode, and a breathing mode. The oxygen concentration 8% mode and the oxygen concentration 5% mode may be collectively referred to as a treatment gas introduction mode.

The oxygen concentration 8% mode is an operating mode in which the air composition adjustment device (100) supplies the nitrogen-enriched gas having an average oxygen concentration of 8% to the internal space (5). The oxygen concentration 5% mode is an operating mode in which the air composition adjustment device (100) supplies the nitrogen-enriched gas having an average oxygen concentration of 5% to the internal space (5). The oxygen concentration 8% mode and the oxygen concentration 5% mode are a second mode in which the gas to be treated is introduced into the internal space (5). In other words, the second mode includes the oxygen concentration 8% mode and the oxygen concentration 5% mode. The outside air introduction mode is a first mode in which the air composition adjustment device (100) introduces the external air into the internal space (5) without changing the composition of the external air. The breathing mode is a third mode in which the air composition adjustment device (100) stops the operation of the air pump (231) to stop the supply of the nitrogen-enriched gas and the outside air to the internal space (5) in order to change the composition of the internal air by the breathing of the cargo inside.

In these operating modes, the oxygen concentration of the gas supplied to the inside increases in the order of the oxygen concentration 5% mode, the oxygen concentration 8% mode, and the outside air introduction mode. The control unit (110) performs a switching action of switching a plurality of operating modes executed by the air composition adjustment device (100). By switching the operating mode by the switching action, the air composition adjustment device (100) adjusts the composition of air in the internal space (5).

### (7-1) Oxygen concentration 8% mode

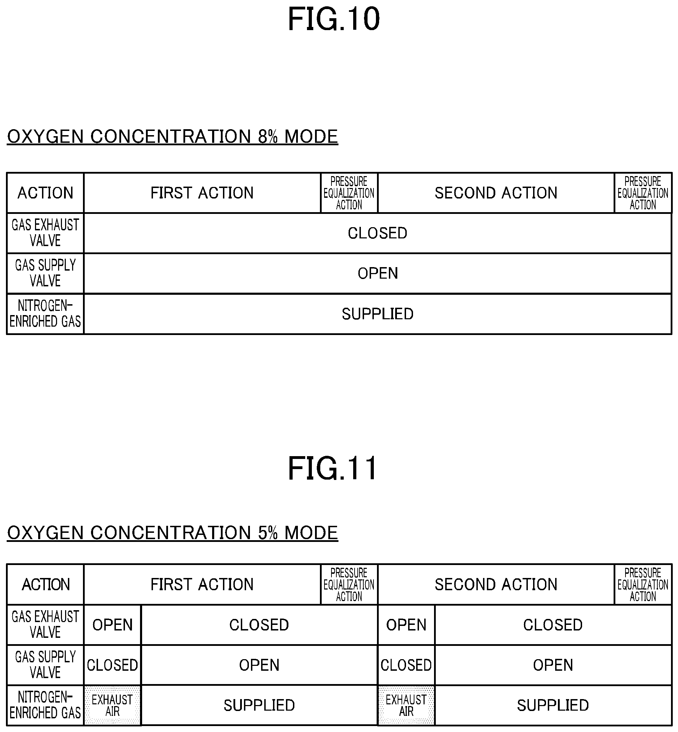

As shown in FIG. 10, in the oxygen concentration 8% mode, the air composition adjustment device (100) alternately repeats the first action and the second action. The air composition adjustment device (100) performs a pressure equalization action between the first action and the second action. In the pressure equalization action, the control unit (110) opens the purge valve (251). As a result, the internal pressures of the first adsorption cylinder (234) and the second adsorption cylinder (235) quickly become equal to each other.

In the oxygen concentration 8% mode, the control unit (110) constantly closes the gas exhaust valve (272) and constantly opens the gas supply valve (273). Therefore, a low-oxygen-concentration gas is supplied to the internal space (5) from a start of the first action and the second action. In each action, the oxygen concentration in the nitrogen-enriched gas changes over time. Specifically, at an initial stage of each action, the nitrogen-enriched gas having a relatively high oxygen concentration is generated because the outside air remains in the adsorption cylinders (234 and 235), the pipe, and the like, and at the end of each action, a large amount of nitrogen component is desorbed because the pressure in the adsorption cylinders is lower than at the initial stage, and the nitrogen-enriched gas having a relatively high oxygen concentration is generated. In the oxygen concentration 8% mode, since the nitrogen-enriched gas is supplied to the internal space (5) from the start of the first action and the second action, the average oxygen concentration of the nitrogen-enriched gas in the entire period of each action is as relatively high as 8%.

### (7-2) Oxygen concentration 5% mode

As shown in FIG. 11, in the oxygen concentration 5% mode, similarly to the oxygen concentration 8% mode, the air composition adjustment device (100) alternately repeats the first action and the second action. The air composition adjustment device (100) performs a pressure equalization action between the first action and the second action.

In the oxygen concentration 5% mode, the control unit (110) causes the air composition adjustment device (100) to perform a gas exhaust action until a predetermined time (for example, four seconds) elapses from the start of the first action. In the gas exhaust action, the control unit (110) constantly opens the gas exhaust valve (272) and constantly closes the gas supply valve (273). As described above, at the initial stage of each action, a nitrogen-enriched gas having a relatively high oxygen concentration is generated. By performing the gas exhaust action, the nitrogen-enriched gas having a relatively high oxygen concentration is not supplied to the internal space (5) but is exhausted to the external space (6) through the gas exhaust pipe (276). Thereafter, during the remaining period of each action, the control unit (110) closes the gas exhaust valve (272) and opens the gas supply valve (273). In this manner, in the oxygen concentration 5% mode, since the nitrogen-enriched gas is exhausted to the external space (6) from the start of the first action and the second action until a predetermined time, the average oxygen concentration of the nitrogen-enriched gas in the entire period of each action is as relatively low as 5%.

### (7-3) Outside air introduction mode

In the outside air introduction mode, the external air in the external space (6) is directly supplied to the internal space (5). In the outside air introduction mode, the control unit (110) causes the air composition adjustment device (100) to execute the outside air introduction action described above. The oxygen concentration of the outside air is about 21%. The oxygen concentration of the internal air can be increased by the outside air introduction mode.

### (7-4) Breathing mode

In the breathing mode, the control unit (110) stops the air pump (231), and closes the gas exhaust valve (272) and the measurement on-off valve (282). In the breathing mode, the nitrogen-enriched gas and the outside air are not supplied to the internal space (5). Therefore, the oxygen concentration of the internal air decreases and the carbon dioxide concentration increases as the cargo breathes.

### (8) Evaluation of airtightness of internal space

The control unit (110) evaluates airtightness of the internal space (5). Specifically, the control unit (110) obtains an airtightness index that is an index indicating airtightness of the internal space (5). The airtightness index is a Cv value. The higher the Cv value, the lower the airtightness of the internal space (5). The lower the Cv value, the higher the airtightness of the internal space (5). For example, in a case where the Cv value is 3.33 or less, since the airtightness of the transport container (1) is relatively high, the internal air can be sufficiently cooled by the transport refrigeration apparatus (10), and the composition of the internal air can be sufficiently adjusted by the air composition adjustment device (100). For example, in a case where the Cv value is larger than 3.33 and smaller than 4.12, the internal air can be sufficiently cooled by the transport refrigeration apparatus (10), but it is difficult to adjust the composition of the internal air by the air composition adjustment device (100). For example, in a case where the Cv value is 4.12 or more, it is difficult to cool the internal air by the transport refrigeration apparatus (10) and to adjust the composition of the internal air by the air composition adjustment device (100). Thus, the Cv value serves for the evaluation of the performance with regard to the airtightness of the transport container (1).

### (8-1) Measurement of Cv value

The control unit (110) executes an airtight measurement mode for obtaining the Cv value. The airtight measurement mode according to the present embodiment includes a first airtight measurement mode, a second airtight measurement mode, and a third airtight measurement mode. The first airtight measurement mode is a mode for measuring the Cv value by using a decompression method. The second airtight measurement mode is a mode for measuring the Cv value by using a pressure boosting method. The third airtight measurement mode is a mode for measuring the Cv value by using a constant pressure method. Details of each airtight measurement mode will be described.

### (8-1-1) First airtight measurement mode (decompression method)

In the first airtight measurement mode, the Cv value is automatically measured by the decompression method. The control unit (110) controls the air pump (231) to perform a decompression action for reducing the internal pressure of the internal space (5). The control unit (110) evaluates airtightness of the internal pressure on the basis of a change in a pressure detected by the differential pressure sensor (170) during the decompression action. Described below is how the control unit (110) obtains the Cv value of the internal space (5) during the decompression action.

In the present embodiment, the control unit (110) operates the air pump (231) to increase the internal pressure of the internal space (5). The control unit (110) obtains the Cv value on the basis of a subsequent decreasing speed of the internal pressure.

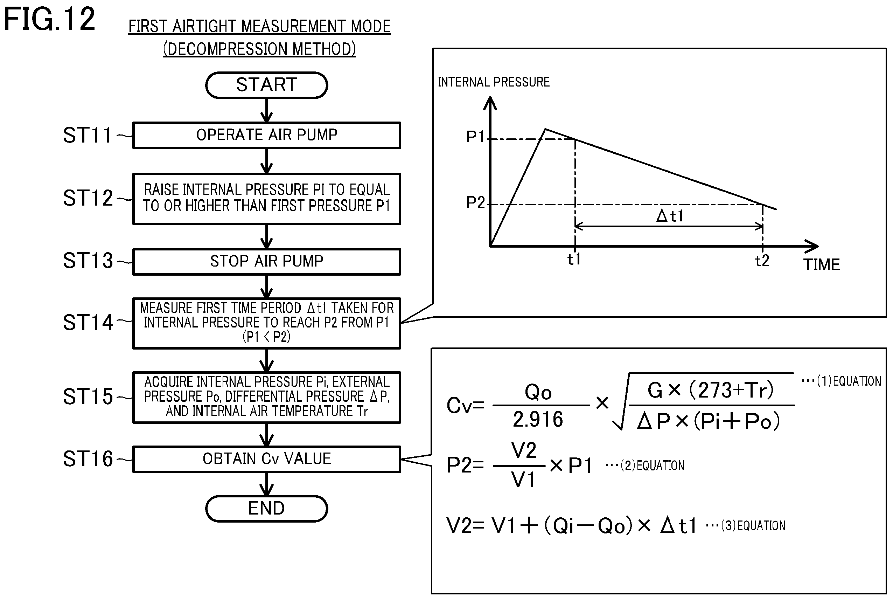

Specifically, as shown in FIG. 12, in step ST11, the control unit (110) operates the air pump (231). In step ST11, the control unit (110) closes the gas exhaust valve (272), the measurement on-off valve (282), and the ventilation exhaust valve (151), and fully closes the air supply passage (41) and the air exhaust passage (42) of the ventilator (40). In step ST11, the air composition adjustment device (100) opens the bypass valve (256) and the gas supply valve (273) similarly to the outside air introduction action described above, and executes the outside air introduction mode (first mode) in which the external air is supplied to the internal space (5) directly by the compression-side pump (231a). However, as will be described in detail later, the air composition adjustment device (100) may execute the oxygen concentration 8% mode or the oxygen concentration 5% mode (second mode) in which the bypass valve (256) is closed, the gas supply valve (273) is opened, and the gas treated in the air treatment unit (95) is supplied to the internal space (5) by the decompression-side pump (231b), similarly to the gas supply action described above. In this manner, the control unit (110) may obtain the airtightness index on the basis of the flow rate of the gas to be treated that is supplied to the internal space (5).

When air is introduced into the internal space (5), the internal pressure (Pi) increases in step ST12. In step ST13, the control unit (110) stops the air pump (231) when the internal pressure (Pi) reaches or exceeds a first pressure (P1). The internal pressure (Pi) is determined by the differential pressure (ΔP) detected by the differential pressure sensor (170). The differential pressure (ΔP) is a difference (ΔP=Pi-Po) between the internal pressure (Pi) and the external pressure (Po). In the present embodiment, the external pressure (Po) is set to the atmospheric pressure (101.3 [kPa]). The control unit (110) calculates the internal pressure (Pi) by adding the external pressure (Po) (atmospheric pressure) to the differential pressure (ΔP).

In step ST14, the control unit (110) measures a first time period (Δt1) taken for the internal pressure (Pi) to reach the second pressure (P2) from the first pressure (P1). In the first airtight measurement mode, the first pressure (P1) is larger than the second pressure (P2). For example, the first pressure (P1) is set to 300 [kPa], and the second pressure (P2) is set to 100 [kPa]. As shown in FIG. 12, the control unit (110) measures the first time period (Δt1) from a first time point (t1) at which the internal pressure (Pi) is the first pressure (P1) to a second time point (t2) at which the internal pressure (Pi) is the second pressure (P2). In a case where the airtightness of the transport container (1) is low, the decreasing speed of the internal pressure (Pi) becomes high, and thus, the first time period (Δt1) becomes short. In a case where the airtightness of the transport container (1) is high, the decreasing speed of the internal pressure (Pi) becomes low, and thus, the first time period (Δt1) becomes long. In this manner, the decreasing speed of the internal pressure, strictly speaking, the time until the internal pressure decreases to a predetermined pressure is an index representing the airtightness of the transport container (1).

Next, in step ST15, the control unit (110) acquires the external pressure (Po), the differential pressure (ΔP), and an internal air temperature (Tr) at the second time point (t2). Next, in step ST16, the control unit (110) calculates the Cv value on the basis of Equations (1), (2), and (3) in FIG. 12. Here, Qo is an outflow flow rate [m³/h] of the gas flowing out of the internal space (5) in the first time period (Δt1). Qi is an inflow flow rate [m³/h] of the gas flowing into the internal space (5) in the first time period (Δt1). G is a specific gravity (=1.0) of the gas (air). Tr is the internal air temperature, that is, the temperature detected by the internal temperature sensor (51). P1 is the internal pressure (first pressure (P1)) at the first time point (t1). P2 is the internal pressure (second pressure (P2)) at the second time point (t2). V1 is a volume of the gas existing in the internal space (5) at the first time point (t1). In a case where no cargo is loaded in the internal space (5), V1 corresponds to a total capacity in a state where the internal space (5) is empty. V2 is a gas volume of the internal space (5) at the second time point (t2). Δt1 is the first time period. Equation (1) is a basic calculation equation of the Cv value, Equation (2) is a theoretical equation based on a state formula in an isochoric and isothermal process, and Equation (3) is a theoretical equation for calculating V2.

In the decompression method, since the air pump (231) is in a stopped state in the first time period (Δt1), Qi becomes zero. Therefore, Qo can be obtained on the basis of Equations (2) and (3). The Cv value can be obtained by substituting Qo and other parameters into Equation (1). Note that the control unit (110) may obtain the Cv value by a function including these equations, or may obtain the Cv value on the basis of a data table including the relationship.

### (8-1-2) Second airtight measurement mode (pressure boosting method)

In the second airtight measurement mode, the Cv value is automatically measured by the pressure boosting method. The control unit (110) controls the air pump (231) to perform a pressure boosting action for boosting the internal pressure of the internal space (5). The control unit (110) evaluates airtightness of internal space (5) on the basis of an increasing speed of the internal pressure that is a change in the pressure detected by the differential pressure sensor (170) during the pressure boosting action. Described below is how the control unit (110) obtains the Cv value of the internal space (5) during the pressure boosting action.

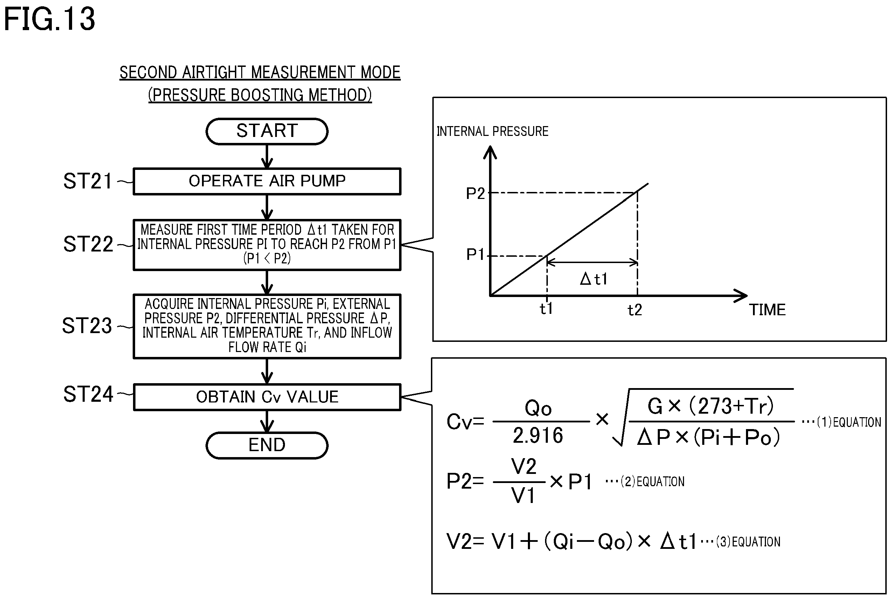

Specifically, as shown in FIG. 13, in step ST21, the control unit (110) operates the air pump (231). Details of the control in step ST21 are similar to those in step ST11.

In step ST22, the control unit (110) measures a first time period (Δt1) taken for the internal pressure (Pi) to reach the second pressure (P2) from the first pressure (P1). In the second airtight measurement mode, the first pressure (P1) is smaller than the second pressure (P2). For example, the first pressure (P1) is set to 100 [kPa], and the second pressure (P2) is set to 300 [kPa]. As shown in FIG. 13, the control unit (110) measures the first time period (Δt1) from a first time point (t1) at which the internal pressure (Pi) is the first pressure (P1) to a second time point (t2) at which the internal pressure (Pi) is the second pressure (P2). In a case where the airtightness of the internal space (5) is low, the increasing speed of the internal pressure (Pi) becomes low, and thus, the first time period (Δt1) becomes long. In a case where the airtightness of the internal space (5) is high, the increasing speed of the internal pressure (Pi) becomes high, and thus, the first time period (Δt1) becomes short. In this manner, the increasing speed of the internal pressure, strictly speaking, the time until the internal pressure increases to a predetermined pressure is an index representing the airtightness of the internal space (5) of the transport container (1).

Next, in step ST23, the control unit (110) acquires the internal pressure (Pi), the external pressure (Po), the differential pressure (ΔP), the internal air temperature (Tr), and the inflow flow rate (Qi) at the second time point (t2). In the pressure boosting method, the inflow flow rate (Qi) corresponds to a control flow rate of the air pump (231). Strictly speaking, the inflow flow rate (Qi) is a control flow rate of the compression-side pump (231a) in a case where air is conveyed to the internal space (5) by the compression-side pump (231a), and is a control flow rate of the decompression-side pump (231b) in a case where air is conveyed by the decompression-side pump (231b). The inflow flow rate (Qi) may be directly measured by providing a flow meter in a flow path for supplying air to the internal space (5).

Next, in step ST24, the control unit (110) calculates the Cv value on the basis of Equations (1), (2), and (3) in FIG. 13. Details of a method of calculating the Cv value are similar to those in the first airtight measurement mode.

### (8-1-3) Third airtight measurement mode (constant pressure method)

In the third airtight measurement mode, the Cv value is automatically measured by the constant pressure method. The control unit (110) operates the air pump (231). When the air pump (231) reaches a steady state, the internal pressure of the internal space (5) becomes constant. The control unit (110) obtains the Cv value on the basis of the internal pressure (Pi) at this time.

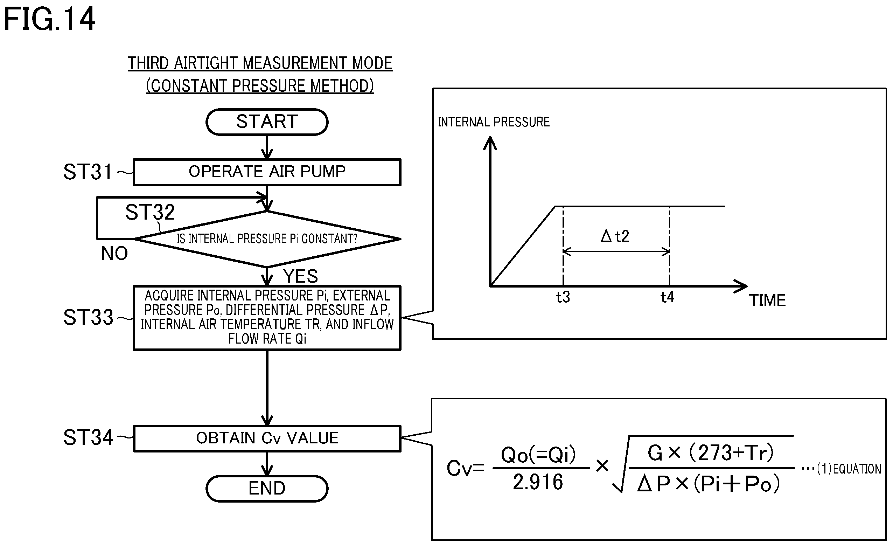

Specifically, as shown in FIG. 14, in step ST31, the control unit (110) operates the air pump (231). Details of the control in step ST31 are similar to those in step ST11.

Next, in step ST32, the control unit (110) determines whether the internal pressure (Pi) is constant. As used herein, "constant" means not only that the internal pressure (Pi) is maintained at a certain value, but also that the internal pressure (Pi) is maintained within a certain predetermined range. In step ST32, the control unit (110) determines whether the internal pressure (Pi) is within a predetermined range for a predetermined second time period (Δt2). In a case where the internal pressure (Pi) is constant for the predetermined second time period (Δt2), the processing proceeds to step ST33. The second time period (Δt2) is an example of a first period. That is, the second time period (Δt2) is a period during execution of the outside air introduction mode, the oxygen concentration 8% mode, or the oxygen concentration 5% mode.

In step ST33, the control unit (110) acquires the internal pressure (Pi), the external pressure (Po), the differential pressure (ΔP), the internal air temperature (Tr), and the inflow flow rate (Qi) in the second time period (Δt2). Here, for example, these parameters may be values at a certain time point of the second time period (Δt2), or may be average values of the entire second time period (Δt2). Next, in step ST34, the control unit (110) obtains the Cv value on the basis of Equation (1) illustrated in FIG. 14. In a case where the internal pressure (Pi) is constant, the inflow flow rate (Qi) and the outflow flow rate (Qo) are balanced. Therefore, the inflow flow rate (Qi) and the outflow flow rate (Qo) in the second time period (Δt2) are equal. Therefore, the Cv value can be obtained by substituting the internal pressure (Pi), the external pressure (Po), the differential pressure (ΔP), the internal air temperature (Tr), and the inflow flow rate (Qi) in the second time period (Δt2) into Equation (4). Here, the inflow flow rate (Qi) is a control flow rate of the compression-side pump (231a) in a case where air is conveyed to the internal space (5) by the compression-side pump (231a), and is a control flow rate of the decompression-side pump (231b) in a case where air is conveyed by the decompression-side pump (231b). The inflow flow rate (Qi) may be directly measured by providing a flow meter in a flow path for supplying air to the internal space (5).

### (9) Airtightness determination action of internal space by control unit

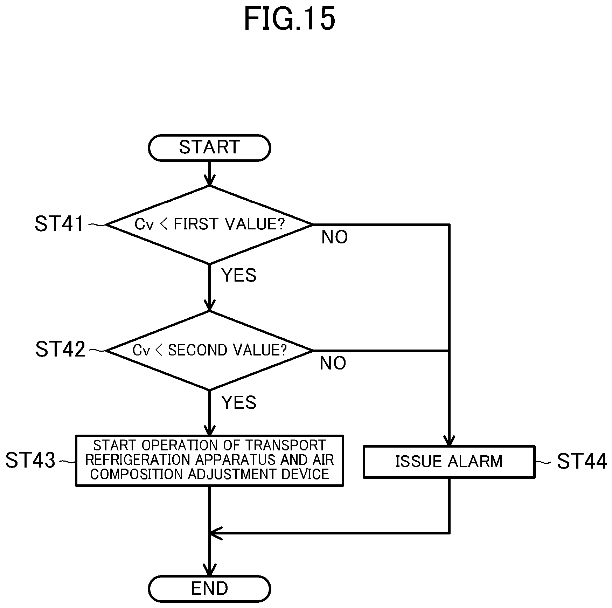

The control unit (110) determines airtightness of the internal space (5) on the basis of the obtained Cv value, and determines whether the air composition adjustment device (100) is operable. An example of an action of the control unit (110) to determine airtightness of the internal space (5) will be described with reference to FIG. 15.

In step ST41, the control unit (110) determines whether the Cv value is lower than a first value. In a case where it is determined that the Cv value is lower than the first value (YES in step ST41), step ST42 is executed. In a case where it is determined that the Cv value is equal to or more than the first value (NO in step ST41), the control unit (110) determines that the transport refrigeration apparatus (10) and the air composition adjustment device (100) are inoperable. The first value is, for example, 4.12. In a case where the Cv value is equal to or more than 4.12, the airtightness of the internal space (5) is sufficiently low, the internal air cannot be sufficiently cooled by the transport refrigeration apparatus (10), and it is also difficult to adjust the composition of the internal air by the air composition adjustment device (100).

In step ST42, the control unit (110) determines whether the Cv value is lower than a second value. In a case where it is determined that the Cv value is lower than the second value (YES in step ST42), step ST43 is executed. In a case where it is determined that the Cv value is equal to or more than the second value (NO in step ST42), the control unit (110) determines that the air composition adjustment device (100) is inoperable. The second value is, for example, 3.33. In a case where the Cv value is 3.33 or more and 4.12 or less, the airtightness of the internal space (5) is relatively low, and the internal air can be sufficiently cooled by the transport refrigeration apparatus (10), but it is difficult to adjust the composition of the internal air by the air composition adjustment device (100). Therefore, in this case, fruits or vegetables can be transported only by operating the transport refrigeration apparatus (10) without operating the air composition adjustment device (100).

In step ST43, the control unit (110) determines that the airtightness of the internal space (5) is sufficiently high, and determines that the operations of the transport refrigeration apparatus (10) and the air composition adjustment device (100) can be executed. In this case, the internal air can be sufficiently cooled by the transport refrigeration apparatus (10), and the composition of the internal air can be sufficiently adjusted by the air composition adjustment device (100).

In step ST44, the control unit (110) outputs predetermined information to the notifier (115). The predetermined information is information indicating that the container body (2) is to be replaced or repaired or that the air composition adjustment device (100) cannot be operated.

### (10) Evaluation of airtightness of internal space by control unit during operation of transport refrigeration apparatus

The control unit (110) evaluates airtightness of the internal space (5) during operation of the transport refrigeration apparatus (10). Specifically, the control unit (110) evaluates the airtightness of the internal space (5) during the operation of the air composition adjustment device (100). The control unit (110) may evaluate the airtightness of the internal space (5) during transportation of a transport container box, or may evaluate the airtightness of the internal space (5) in a state where the transport container is placed on a predetermined place.

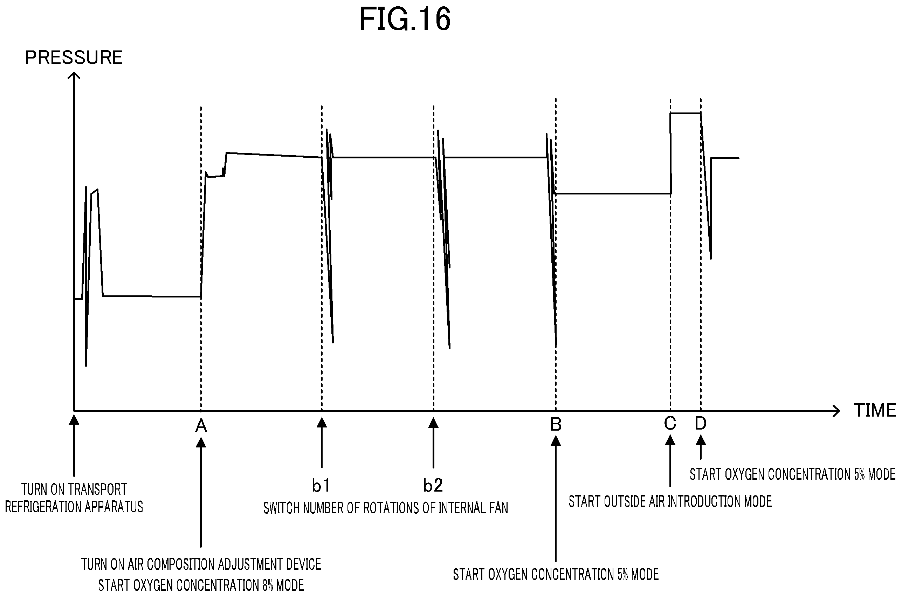

The control unit (110) evaluates the airtightness of the internal space (5) on the basis of a change in the pressure detected by the differential pressure sensor (170) when the operating mode is switched by the switching action during past operation of the air composition adjustment device, that is, on the basis of a change in the internal pressure. Hereinafter, an operation of determining the airtightness of the internal space (5) by the control unit (110) will be described on the basis of an operation example of the transport refrigeration apparatus (10) shown in FIG. 16.

After cargo such as fruit or vegetable is loaded in the internal space and the door of the container body (2) is closed, the operation of the transport refrigeration apparatus (10) is started to lower an internal temperature to a set temperature. Thereafter, the internal temperature is maintained at the set temperature until a time point A. When the time point A elapses, the control unit (110) starts the operation of the air composition adjustment device (100). The control unit (110) executes the oxygen concentration 8% mode. The gas to be treated flows into the internal space (5), and then, the internal pressure increases. Thereafter, the internal pressure becomes constant, and the oxygen concentration 8% mode is continued until a time point B. During the operation of the air composition adjustment device (100), a wind speed of the internal fan (35) is switched. In FIG. 16, during the execution of the oxygen concentration 8% mode, the wind speed of the internal fan (35) is switched at time points b1 and b2. At this time, when the number of rotations of the internal fan (35) is switched, the wind speed changes, and thus, the internal pressure temporarily changes.

In the period from the time point A to the time point B, the internal pressure can be regarded as constant. Therefore, the airtightness of the internal space (5) can be evaluated by considering the period from the time point A to the time point B as the first period and executing the third airtightness measurement mode (constant pressure method). However, in the first period, the internal pressure temporarily changes due to the switching of the wind speed of the internal fan (35) as described above, and thus the control unit (110) evaluates the airtightness of the internal space (5) on the basis of the internal pressure in the period in which the wind speed of the internal fan (35) is in a steady state in the first period. Here, the steady state means a state in which the wind speed is stabilized after the number of rotations of the internal fan (35) is switched. The steady state refers to a state of the wind speed of the internal fan (35) during a period in which the internal pressure becomes constant after the number of rotations of the internal fan (35) is switched. In the steady state, the number of rotations of the internal fan (35) is constant.

When the time point B has elapsed, the control unit (110) switches to the oxygen concentration 5% mode. As a result, since the flow rate of the gas to be treated flowing into the internal space (5) decreases, the internal pressure decreases. Accordingly, the control unit (110) can evaluate the airtightness of the internal space (5) by executing the first airtight measurement mode (decompression method). Since the internal pressure becomes constant after decreasing, the airtightness of the internal space (5) can be evaluated by the third airtight measurement mode (constant pressure method).

When the internal space (5) reaches a desired oxygen concentration and carbon dioxide concentration, the control unit (110) controls the air composition adjustment device (100) to maintain the oxygen concentration and the carbon dioxide concentration in the internal space (5). When the oxygen concentration in the internal space (5) decreases at a time point C, the control unit (110) switches to the outside air introduction mode for taking the outside air into the internal space (5). At this time, since the flow rate of the gas flowing into the internal space (5) increases, the internal pressure increases. Accordingly, the control unit (110) can evaluate the airtightness of the internal space (5) by executing the second airtight measurement mode (compression method). The control unit (110) can evaluate the airtightness of the internal space (5) on the basis of an increasing change in the pressure detected by the differential pressure sensor (170) in a case where the oxygen concentration 5% mode is switched to the outside air introduction mode.

Although not shown, when the oxygen concentration increases due to the execution of the outside air introduction mode, the control unit (110) switches to the breathing mode in which the operation of the air pump (231) is stopped. At this time, since the inflow of the gas into the internal space (5) is stopped, the internal pressure decreases. Accordingly, the control unit (110) can evaluate the airtightness of the internal space (5) by executing the first airtight measurement mode (decompression method). The control unit (110) can evaluate the airtightness of the internal space (5) on the basis of a decreasing change in the pressure detected by the differential pressure sensor (170) in a case where the outside air introduction mode is switched to the breathing mode.

### (11) Determination of abnormality of ventilator

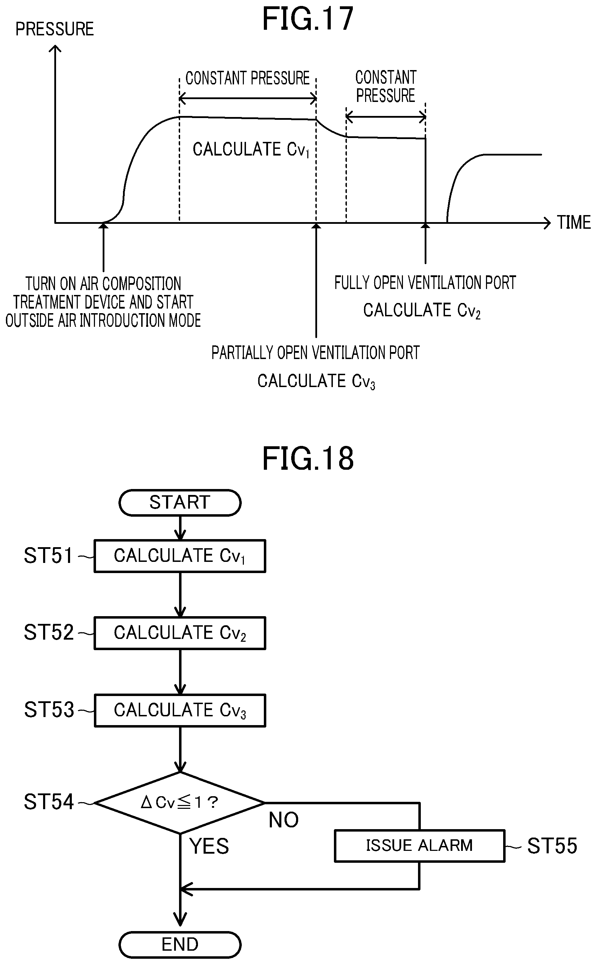

Next, determination of abnormality of the ventilator (40) based on the value of the airtightness index of the internal space (5) will be described. The control unit (110) evaluates the opening degrees of the air supply passage (41) and the air exhaust passage (42) of the ventilator (40) on the basis of the airtightness index. Specifically, an opening area S of the air supply passage (41) and the air exhaust passage (42) is determined for each position of the opening and closing lid (45). By determining how much the actual Cv value of the internal space (5) deviates from a true value with the Cv value obtained on the basis of the opening area S as the true value, it can be determined whether the position of the opening and closing lid (45) is normally controlled. A flow of the determination by the control unit (110) will be described with reference to FIGS. 17 and 18.

A change in the internal pressure due to the operation of the air composition adjustment device (100) shown in FIG. 17 will be described. The outside air introduction mode is executed in a state where the air supply passage (41) and the air exhaust passage (42) are fully closed. As a result, the internal pressure increases, and then the internal pressure is maintained constant. After the internal pressure is maintained constant, the opening and closing lid (45) is rotationally moved to a predetermined position. As a result, the air supply passage (41) and the air exhaust passage (42) are partially opened, and the internal pressure decreases. After the internal pressure is maintained constant in a state where the air supply passage (41) and the air exhaust passage (42) are partially opened, the air supply passage (41) and the air exhaust passage (42) are fully opened. Accordingly, the internal pressure further decreases. Thereafter, the air supply passage (41) and the air exhaust passage (42) are closed, and the outside air introduction mode is executed again.

In step ST51, the control unit (110) obtains a Cv₁ value of the internal space (5) during the execution of the outside air introduction mode. In a case where Cv₁ is obtained when the internal pressure increases, the second airtight measurement mode is executed. In a case where Cv₁ is obtained when the internal pressure is constant, the third airtight measurement mode is executed.

In step ST52, the control unit (110) obtains a Cv₂ value when the air supply passage (41) and the air exhaust passage (42) are partially opened. In a case where Cv₂ is obtained when the internal pressure decreases, the first airtight measurement mode is executed. In a case where Cv₂ is obtained when the internal pressure is constant, the third airtight measurement mode is executed.

In step ST53, the control unit (110) obtains a Cv₃ value when the air supply passage (41) and the air exhaust passage (42) are partially opened. Cv₃ can be obtained by Cv₃= opening area S/18.45. The opening area S is a theoretical value set in accordance with a rotation angle of the opening and closing lid (45). Assuming that the opening area S is the largest when the rotation angle of the opening and closing lid (45) is α, the opening area S increases as the rotation angle of the opening and closing lid (45) moves from zero to α.

In step ST54, the control unit (110) determines whether ΔCv is less than or equal to 1. ΔCv can be obtained by ΔCv=|Cv₃-(Cv₁-Cv₂) |. In a case where ΔCv is 1 or less, the action of the opening and closing lid (45) and the position of the opening and closing lid (45) are considered to be normal, and this control flow ends. On the other hand, in a case where ΔCv is larger than 1, the action of the opening and closing lid (45) and the position of the opening and closing lid (45) are considered to be abnormal, and step ST55 is executed.

Here, a value (ΔCv) obtained by subtracting a Cv value (Cv₂) after partial opening of the air supply passage (41) and the air exhaust passage (42) from a Cv value (Cv₁) before the partial opening represents a leakage amount of gas caused only by the partial opening of the air supply passage (41) and the air exhaust passage (42). Therefore, in a case where the opening and closing lid (45) normally acts, ΔCv becomes zero. However, in a case where the opening degrees of the air supply passage (41) and the air exhaust passage (42) are larger than the theoretical value S due to the abnormality in the position control of the opening and closing lid (45), ΔCv becomes a positive value. In a case where the opening degrees of the air supply passage (41) and the air exhaust passage (42) are smaller than the theoretical value S, ΔCv is a negative value.

In step ST55, the control unit (110) issues an alarm indicating that the position control of the opening and closing lid (45) is abnormal. As a result, the ventilator (40) can be repaired or replaced.

### (12) Characteristics

### (12-1) Characteristics 1

The control unit (110) of the air composition adjustment device (100) according to the present embodiment evaluates airtightness of the internal space (5) on the basis of the change in pressure in the internal space (5) caused by operation of the air pump (231).

The airtightness of the internal space (5) can be evaluated by using the air pump (231) capable of confirming the flow rate of the gas in this manner. Therefore, since a device such as an external compressor for evaluating the airtightness is unnecessary, a place and timing for evaluating the airtightness can be appropriately set. In particular, since the airtightness can be evaluated even during transportation of the container (1), the airtightness of the internal space (5) can be evaluated even in a state where cargo is loaded on the container.

### (12-2) Characteristics 2

The control unit (110) according to the present embodiment obtains the airtightness index that is an index indicating the airtightness of the internal space (5).

The airtightness of the internal space (5) can be evaluated relatively easily by using the airtightness index.

### (12-3) Characteristics 3

The control unit (110) according to the present embodiment determines the airtightness of the internal space (5) on the basis of the airtightness index.

The airtightness of the internal space (5) can be determined by using the airtightness index. Accordingly, in a case where the airtightness is sufficiently low, the internal air cannot be maintained at a predetermined temperature, and the internal air cannot be maintained at an adjusted predetermined air composition. In such a case, since the transport container (1) cannot be used for transportation of cargo such as fruit or vegetable, it is possible to promptly confirm whether the transport container can be used and whether the transport container (1) needs to be repaired by determining the airtightness of the internal space (5).

### (12-4) Characteristics 4

The control unit (110) according to the present embodiment determines whether the air composition adjustment device (100) is operable on the basis of the airtightness index.

By using the airtightness index, it is possible to determine whether the air composition adjustment device (100) is operable. As a result, it is possible to perform normal transportation in which only refrigeration or freezing is performed without using the air composition adjustment device (100) as long as the airtightness is high enough to maintain the internal space (5) at a predetermined temperature by the operation of the transport refrigeration apparatus (10).

### (12-5) Characteristics 5

In the present embodiment, the differential pressure sensor that detects a differential pressure between the external air and the internal air is included.

In a case where the pressure of the external air is set to a standard atmospheric pressure, the pressure of the internal space (5) can be detected by the differential pressure.

### (12-6) Characteristics 6

In the present embodiment, the control unit (110) obtains the airtightness index on the basis of the pressure in the internal space (5) in the first period in which the air pump (231) is controlled so as to maintain the pressure in the internal space (5) in a predetermined range.

In a state where the internal pressure is kept constant, it can be considered that the inflow amount and the outflow amount of the gas are equal. This can be used to evaluate the airtightness of the internal space (5) when the internal pressure is constant.

### (12-7) Characteristics 7

The control unit (110) according to the present embodiment obtains the airtightness index on the basis of the pressure in the internal space (5) during a period in which the wind speed of the internal fan (35) is in the steady state in the first period.

A change in the wind speed of the internal fan (35) temporarily changes a pressure value in the internal space (5). In particular, in a state where the pressure in the internal space (5) is constant, an influence of the change in the wind speed of the internal fan (35) is great. Therefore, a more accurate airtightness index can be obtained by obtaining the airtightness index during the period in which the wind speed of the internal fan (35) is in the steady state.

### (12-8) Characteristics 8

The control unit (110) according to the present embodiment executes the outside air introduction mode (first mode) for introducing the external air into the internal space (5) without changing a composition of the external air, and the first period is a period during which the first mode is executed.

During the execution of the outside air introduction mode, the airtightness index can be obtained by the third airtightness measurement mode (constant pressure method).

### (12-9) Characteristics 9

The control unit (110) according to the present embodiment executes the second mode as the oxygen concentration 8% mode and the oxygen concentration 5% mode in which the gas to be treated is introduced into the internal space (5), and the first period is a period during which the second mode is executed.

During the execution of the oxygen concentration 8% mode or the oxygen concentration 5% mode, the airtightness index can be obtained by the third airtight measurement mode (constant pressure method).

### (12-10) Characteristics 10

The control unit (110) according to the present embodiment obtains the airtightness index on the basis of the flow rate of the gas to be treated that is supplied to the internal space (5). Since the flow rate of the gas to be treated can be confirmed, the airtightness index can be obtained from the flow rate.

### (12-11) Characteristics 11

The control unit (110) according to the present embodiment controls the air pump (231) to perform the pressure boosting action for boosting the internal pressure of the internal space (5). The control unit (110) evaluates airtightness of the internal space (5) on the basis of a change in the pressure detected by the differential pressure sensor (170) during the pressure boosting action. Accordingly, the airtightness of the internal space (5) can be evaluated even in a state where the internal pressure increases.

### (12-12) Characteristics 12

The control unit (110) according to the present embodiment controls the air pump (231) to perform the decompression action for reducing the internal pressure of the internal space (5). The control unit (110) evaluates airtightness of the internal space (5) on the basis of a change in the pressure detected by the differential pressure sensor (170) during the decompression action. Accordingly, the airtightness of the internal space (5) can be evaluated even in a state where the internal pressure decreases.

### (12-13) Characteristics 13

The control unit (110) according to the present embodiment evaluates the airtightness of the internal space (5) on the basis of a change in the pressure detected by the differential pressure sensor (170) when the operating mode is switched by the switching action.

During the operation of the air composition adjustment device (100), the pressure in the internal space (5) changes when the operating mode is switched on the basis of the state of the oxygen concentration or the carbon dioxide concentration in the internal space (5). By utilizing the above, the airtightness of the internal space (5) can be evaluated in the first airtight measurement mode, the second airtight measurement mode, or the third airtight measurement mode.

### (12-14) Characteristics 14

The control unit (110) evaluates the airtightness of the internal space (5) on the basis of an increasing change in the pressure detected by the differential pressure sensor (170) when the oxygen concentration 8% mode or the oxygen concentration 5% mode is switched to the outside air introduction mode or when the breathing mode is switched to the outside air introduction mode.

In a case where the operating mode is switched to increase the internal pressure, the airtightness of the internal space (5) can be evaluated by the second airtightness measurement mode.

### (12-15) Characteristics 15

The control unit (110) according to the present embodiment evaluates the airtightness of the internal space (5) on the basis of a decreasing change in the pressure detected by the differential pressure sensor (170) when the outside air introduction mode is switched to the breathing mode or when the oxygen concentration 8% mode or the oxygen concentration 5% mode is switched to the breathing mode.

In a case where the operating mode is switched to decrease the internal pressure, the airtightness of the internal space (5) can be evaluated by the first airtightness measurement mode.

### (12-16) Characteristics 16

The control unit (110) according to the present embodiment evaluates the opening degree of the ventilation port (41 and 42) of the ventilator (40) provided in the transport container (1) on the basis of the airtightness index.

In this manner, the opening degree of the ventilation ports (41 and 42) can be determined on the basis of the airtightness index. As a result, it is possible to confirm whether the opening and closing lid (45) is normally acting.

### (12-17) Characteristics 17

The control unit (110) according to the present embodiment evaluates the airtightness of the internal space (5) during transportation of the transport container (1).

The airtightness of the internal space (5) of the transport container (1) can be evaluated in real time. As a result, a situation of the internal space (5) can always be confirmed.

### (13) Modifications of embodiment

The above-described embodiment may have a configuration of the following modifications. Hereinafter, in principle, differences from the above embodiment will be described.

### (13-1) Modification 1

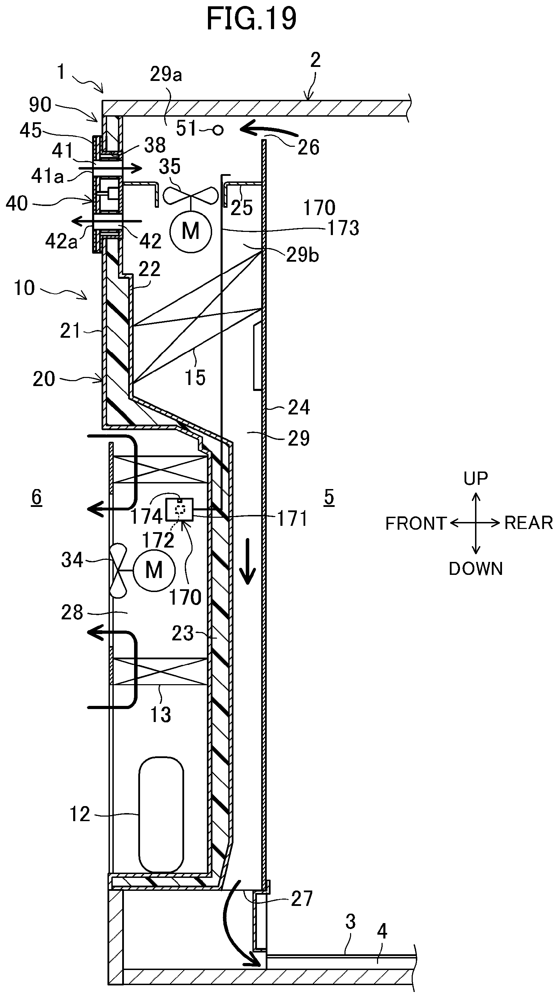

As shown in FIG. 19, the body case (171) of the differential pressure sensor (170) that is a first pressure detector of Modification 1 is disposed in the external space (6). Specifically, the body case (171) is disposed in the external device chamber (28). The external communication passage (174) is configured by a communication hole formed in the body case (171), and causes the external space (6) and the inside of the body case (171) to communicate with each other. The internal communication passage (173) is formed inside a tube. The tube extends from the body case (171) to the internal space (5). The differential pressure sensor (170) detects the differential pressure (ΔP) between the internal space (5) and the external space (6). The control unit (110) determines the internal pressure (Pi) on the basis of the differential pressure (ΔP) with the external pressure as the atmospheric pressure.

### (13-2) Modification 2

An air composition adjustment device (100) of Modification 2 includes an external pressure sensor (180) that is a second pressure detector (180) that detects the pressure of the external air. The first pressure detector (170) is an internal pressure sensor (170). The internal pressure sensor (170) and the external pressure sensor (180) are separate and independent sensors. The internal pressure sensor (170) is disposed in the internal space (5). Specifically, the internal pressure sensor (170) is disposed in the primary flow path (29a) of the internal air flow path (29). The external pressure sensor (180) is disposed in the external space (6). Specifically, the external pressure sensor (180) is disposed in the external device chamber (28). The internal pressure sensor (170) detects the internal pressure (Pi), and the external pressure sensor (180) detects the external pressure (Po). The control unit (110) obtains the differential pressure (ΔP) by subtracting the external pressure from the internal pressure (Pi). In this manner, the airtightness index of the internal space (5) is obtained on the basis of the detection values of the internal pressure sensor (170) and the external pressure sensor (180).

### (14) Second embodiment

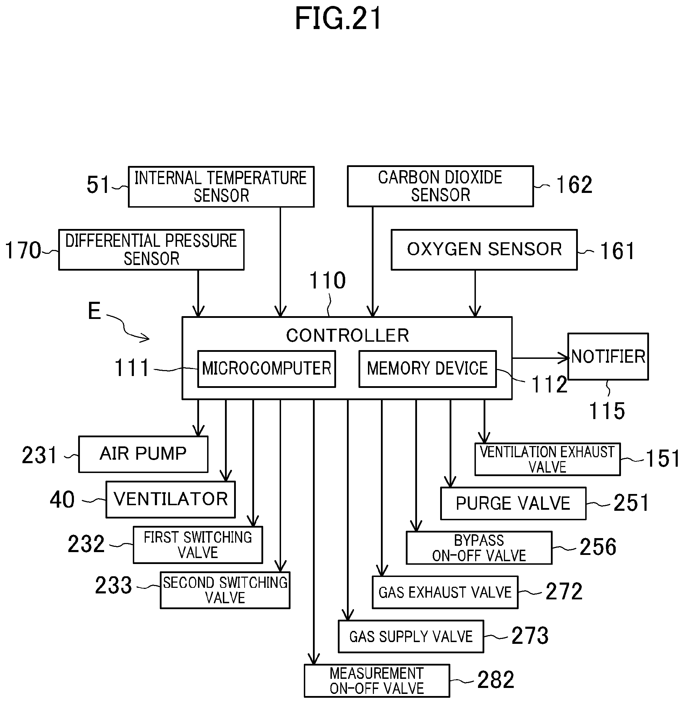

As shown in FIG. 21, an air composition adjustment device (100) according to a second embodiment includes an estimation device (E). The estimation device (E) estimates a first flow rate that is a flow rate of gas conveyed to the internal space (5). The gas is a gas to be treated which is conveyed to the internal space (5) by the decompression-side pump (231b).

The control unit (110) according to the second embodiment is provided in the estimation device (E). The control unit (110) obtains an airtightness index that is an index indicating airtightness of the internal space (5). The control unit (110) estimates the first flow rate on the basis of the internal pressure and the airtightness index during the operation of the air pump (231).

The estimation device (E) includes the differential pressure sensor (170) and the air pump (231) that supplies gas to the internal space (5). The estimation device (E) according to the present embodiment further includes the internal temperature sensor (51), the oxygen sensor (161), the carbon dioxide sensor (162), and the notifier (115). The notifier (115) includes a display that displays the predetermined information or a speaker that issues the predetermined information. The notifier (115) having received the predetermined information displays or issues the information. The notifier (115) may be provided in the transport refrigeration apparatus (10). In the second embodiment, the estimation device (E) executes the airtight measurement mode for obtaining the Cv value. The estimation device (E) operates the air pump (231) as a pressure adjuster.

### (14) Determination of abnormality of air pump

The estimation device (E) determines abnormality of the air pump (231). Specifically, the control unit (110) estimates the first flow rate that is a flow rate of the gas to be treated flowing into the internal space (5) on the basis of the internal pressure during the operation of the air pump (231) and the airtightness index of the internal space (5). The control unit (110) evaluates the abnormality of the air pump (231) on the basis of the estimated first flow rate.

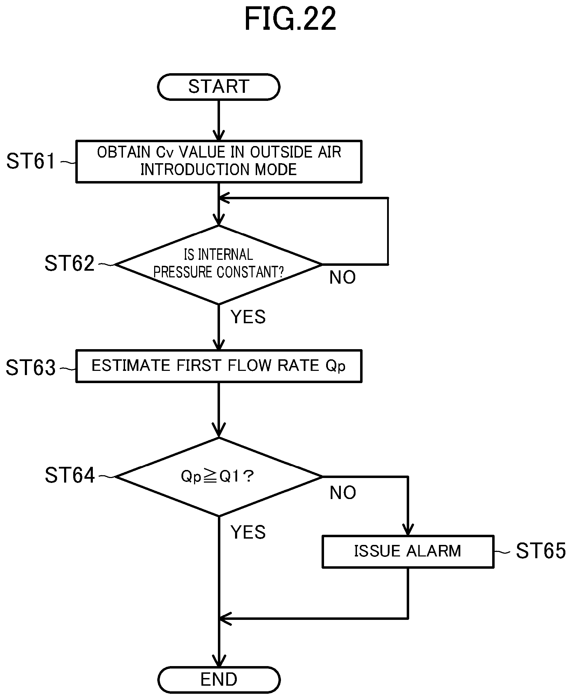

Hereinafter, an example will be described with reference to FIG. 22 in which the control unit (110) estimates the flow rate of the gas to be treated having an oxygen concentration of 8% while the air composition adjustment device (100) sequentially executes the outside air introduction mode (first mode) for introducing the external air into the internal space (5) without changing the composition and the oxygen concentration 8% mode (second mode) for introducing the gas to be treated into the internal space (5).

In step ST61, the control unit (110) obtains a Cv value of the internal space (5) during the outside air introduction mode. Since the pressure in the internal space (5) increases due to introduction of the outside air, the control unit (110) obtains the Cv value of the internal space (5) by the first airtight measurement mode.

In step ST62, the control unit (110) determines whether the internal pressure is constant in the oxygen concentration 8% mode. In a case where it is determined that the internal pressure is constant (YES in step ST62), step ST63 is executed. In a case where it is determined that the internal pressure is not constant (NO in step ST62), step ST62 is executed again.

In step ST63, the control unit (110) estimates the first flow rate of the gas to be treated having an oxygen concentration of 8%. Specifically, the control unit (110) obtains a first flow rate Qp of the gas to be treated having the oxygen concentration of 8% by the third airtight measurement mode by using Cv obtained in step S61.

In step ST64, the control unit (110) determines whether the first flow rate Qp estimated in step ST63 is equal to or higher than a preset flow rate Q1 of the gas to be treated having an oxygen concentration of 8%. In a case where the flow rate Q1 is equal to or higher than the first flow rate Qp, it can be determined that the decompression-side pump (231b) is conveying the gas to be treated having a normal flow rate to the internal space (5). On the other hand, in a case where the flow rate Q1 is lower than the first flow rate Qp, it can be determined that the gas to be treated having a normal flow rate does not flow into the internal space (5) from the decompression-side pump (231b), and a failure occurs in the decompression-side pump (231b). In a case where it is determined that the flow rate Q1 is equal to or higher than the first flow rate Qp (YES in step ST64), it is determined that the air pump (231) is functioning normally, and this control ends. In a case where it is determined that the flow rate Q1 is lower than the first flow rate Qp (NO in step ST64), it is determined that the air pump (231) is not functioning normally, and step ST65 is executed.

In step ST65, the control unit (110) outputs a signal indicating that the decompression-side pump (231b) of the air pump (231) is abnormal to the notifier (115). The notifier (115) having received the signal issues an alarm.

### (15) Characteristics

### (15-1) Characteristics 1

In the estimation device (E) according to the present embodiment, the control unit (110) estimates the first flow rate that is the flow rate of the gas supplied to the internal space (5) on the basis of the internal pressure and the airtightness index during the operation of the air pump (231).

Accordingly, since the flow rate of the gas supplied to the internal space (5) can be estimated, a sensor or the like for measurement can be eliminated. Therefore, it is possible to suppress an increase in the number of parts and an increase in cost due to attachment of the sensor as described above.

### (15-2) Characteristics 2

In the present embodiment, the air pump (231) is provided in the air composition adjustment device (100) that adjusts the composition of air in the internal space (5). The air pump (231) includes the compression-side pump (231a) that conveys the external air to the internal space (5), and the decompression-side pump (231b) that conveys the gas to be treated having a composition different from the composition of the external air to the internal space (5), and the first flow rate is a flow rate of the gas to be treated conveyed to the internal space (5) by the decompression-side pump (231b).

Accordingly, it is possible to estimate the flow rate of the gas to be treated conveyed to the internal space (5) by the decompression-side pump (231b) during the operation of the air composition adjustment device (100).

### (15-3) Characteristics 3

In the present embodiment, the control unit (110) estimates the first flow rate Qp on the basis of the airtightness index when the external air is supplied to the internal space (5) by the compression-side pump (231a). In the outside air introduction mode, the external air is supplied to the internal space (5) by the compression-side pump (231a). Therefore, the airtightness index Cv of the internal space (5) can be obtained by the outside air introduction mode. The flow rate of the gas to be treated can be estimated by using this Cv as a true value.

### (15-4) Characteristics 4

In the present embodiment, in the process in which the air composition adjustment device (100) sequentially executes the outside air introduction mode and the treatment gas introduction mode, the control unit (110) estimates the first flow rate Qp of the gas to be treated. In this manner, when the outside air introduction mode and the treatment gas introduction mode are sequentially executed, the flow rate Qp of the gas to be treated can be estimated.

### (15-5) Characteristics 5

In the present embodiment, the control unit (110) evaluates the abnormality of the air pump (231) on the basis of the estimated first flow rate. In a case where the estimated first flow rate Qp of the treatment gas is equal to or higher than the preset flow rate Q1 of the gas to be treated, it can be determined that the air pump (231) is normally operating. On the other hand, in a case where the estimated first flow rate Qp of the gas to be treated is lower than the preset flow rate Q1 of the gas to be treated, it can be determined that the gas to be treated has not been normally conveyed from the decompression-side pump (231b). For example, if a packing or the like provided in the decompression-side pump (231b) is broken, the decompression-side pump (231b) cannot suck a set amount of the gas to be treated from the air treatment unit (95). Therefore, the decompression-side pump (231b) cannot supply sufficient gas to be treated to the internal space (5). In this manner, abnormality of the air pump (231) can be determined during the operation of the air composition adjustment device (100). Therefore, regular part replacement and inspection of the air pump (231) can be made unnecessary, and replacement of a part that still needs to be replaced can be suppressed, and thus, an increase in cost can be suppressed. In particular, the estimation device (E) according to the present embodiment can be used for determining abnormality of the decompression-side pump (231b). The abnormality of the air pump (231) can also be determined during the transportation of the transport container (1).

### (15-6) Characteristics 6

The transport refrigeration apparatus (10) according to the present embodiment includes the estimation device (E) and the refrigerant circuit (11) for cooling the internal space (5). It is possible to provide a refrigeration cycle apparatus capable of estimating the flow rate of gas flowing into the internal space (5). In particular, in a case where the cargo of the container (1) is fresh food, it is necessary to manage the air composition in addition to managing the temperature of the internal space (5). Therefore, the estimation of the flow rate of gas flowing into the internal space (5) is useful for transporting such cargo.

### (16) Other embodiments

The above embodiments and modifications may be configured as follows.

The sensor unit (160) may include a refrigerant leak sensor (not shown) that detects a refrigerant leaking from the transport refrigeration apparatus (10) into the internal space (5).

The detection value detected by each sensor of the sensor unit (160) may be corrected on the basis of a pressure value. For example, an infrared sensor includes a light emitter and a light receiver. The light emitted from the light emitter passes through gas and is received by the light receiver. The gas concentration is obtained on the basis of the intensity of the light having passed through the gas and received by the light receiver. On the basis of Beer-Lambert law, the amount of light absorbed by gas is proportional to the gas concentration. On the basis of such properties and an equation of state of gas (PV=nRT), it has been found that the molar concentration of gas is proportional to the pressure. Therefore, the detection value of the concentration of gas (oxygen, carbon dioxide, refrigerant gas, and the like) indicated by various sensors of the sensor unit (160) varies depending on the internal pressure. As a result, for example, correction data indicating the relationship between the internal pressure and the correction value is stored in the control unit (110), and the control unit (110) can calculate the concentration of gas that does not depend on the internal pressure existing in the internal space (5) on the basis of the obtained internal pressure of the internal space (5), the gas concentration, and the correction data.

The airtightness index is only required to be an index indicating airtightness of the internal space (5), and is not limited to the Cv value.

The control unit (110) is only required to evaluate the airtightness of the internal space (5) during the operation of the air composition adjustment device (100). For example, in "Evaluation of airtightness of internal space by control unit during operation of transport refrigeration apparatus" of the above embodiment, the control unit (110) may evaluate the airtightness of the internal space (5) by the second airtightness measurement mode by using a change in the internal pressure that increases when the operating mode is switched from the breathing mode to the outside air introduction mode. The airtightness of the internal space (5) may be evaluated by the first airtightness measurement mode by utilizing a change in the internal pressure which decreases when the operating mode is switched from the oxygen concentration 8% mode and the oxygen concentration 5% mode which are the second modes to the breathing mode.

The air treatment unit (95) may be configured to separate the external air (atmosphere) into a nitrogen-enriched gas and an oxygen-enriched gas by using a gas separation membrane. The gas separation membrane has a property that the permeation rate of nitrogen is lower than both the permeation rate of oxygen and the permeation rate of carbon dioxide. Therefore, in the air treatment unit (95), the external air is separated into the oxygen-enriched gas that has permeated through the gas separation membrane and the nitrogen-enriched gas that has not permeated through the gas separation membrane.

The first pressure detector (170) may include only the internal pressure sensor. The internal pressure sensor is disposed in the internal space (5). Specifically, the internal pressure sensor is disposed in the primary flow path (29a) of the internal air flow path (29). The control unit (110) determines the differential pressure (ΔP) by setting the external pressure to atmospheric pressure and subtracting the atmospheric pressure from the internal pressure (Pi).

The transport container (1) may be, for example, a container for land transport transported by a truck, a railway, or the like. The transport container (1) is not required to have an air cooling function.

The transport refrigeration apparatus (10) is not required to include the air composition adjustment device (100). For example, the air composition adjustment device (100) and the transport refrigeration apparatus (10) may be independent separate devices. In this case, the internal fan (35) may be included in the air composition adjustment device (100).

The refrigerant circuit (11) included in the transport refrigeration apparatus (10) may be configured to perform defrost operation for removing frost adhering to the internal heat exchanger (15) functioning as an evaporator. In this case, the first to third airtight measurement modes are not executed for the internal space (5) during the defrost operation. That is, the airtightness of the internal space (5) during the defrost operation is not evaluated. The airtightness is not evaluated for the internal space (5) while being pulled down, in which the air temperature in the internal space (5) decreases to a set value through the operation of the transport refrigeration apparatus (10).

Regarding the action for determining the airtightness by the control unit (110) according to the above embodiment, in step ST41, the control unit (110) may determine at least either whether the transport refrigeration apparatus (10) is operable or whether the air composition adjustment device (100) is operable.

The estimation device (E) may estimate a flow rate at which the external air which is gas is introduced into the internal space (5). In this case, the estimation device (E) may determine the abnormality of the compression-side pump (231a) which is the first conveyor of the air pump (231).

The estimation device (E) may determine abnormality of the gas exhaust valve (272). For example, when the control unit (110) executing the oxygen concentration 8% mode switches to the oxygen concentration 5% mode, the gas exhaust valve (272) is opened, and the gas exhaust action is performed. In the gas exhaust action, since a predetermined gas is not supplied to the internal space (5) but exhausted to the external space (6) through the gas exhaust pipe (276), the internal space (5) is decompressed. By utilizing the above, the estimation device (E) determines whether the gas exhaust valve (272) is normally acting on the basis of a change in the internal pressure.

The estimation device (E) is not required to be applied to the air composition adjustment device (100). In this case, the conveyors (231a and 231b) are not required to be the air pump (231) according to the above embodiment as long as the conveyors supply gas to the internal space (5). For example, the control unit (110) may include, as data, the airtightness index of the internal space (5) previously obtained, and estimate the first flow rate in any one of the first to third airtight measurement modes by using this data.

The estimation device (E) is only required to be able to estimate the first flow rate of the gas supplied to the internal space (5), and is not required to determine the abnormality of the air pump (231) as the conveyor.

The estimation device (E) is not required to obtain the first flow rate in the process of sequentially operating the outside air introduction mode as the first mode and the treatment gas introduction mode as the second mode.

In a case where the air composition adjustment device (100) executes the oxygen concentration 5% mode after executing the oxygen concentration 8% mode in the operation process of sequentially performing the outside air introduction mode and the treatment gas introduction mode, the estimation device (E) may estimate the flow rate of the gas to be treated having an oxygen concentration of 5% as the first flow rate Qp by using Cv obtained in the outside air introduction mode. The estimation device (E) may determine the abnormality of the air pump (231) on the basis of the first flow rate Qp of the gas to be treated having an oxygen concentration of 5%. When determining that the first flow rate Qp of the gas to be treated having an oxygen concentration of 5% is equal to or higher than the flow rate Q1 of the gas to be treated having an oxygen concentration of 5% set in advance, the control unit (110) can determine that the decompression-side pump (231b) is normal. On the other hand, when determining that the first flow rate Qp of the gas to be treated having an oxygen concentration of 5% is lower than the flow rate Q1 of the gas to be treated having an oxygen concentration of 5% set in advance, the control unit (110) can determine that the decompression-side pump (231b) is abnormal. Furthermore, the abnormality of the air pump (231) may be determined on the basis of both the first flow rate Qp in the oxygen concentration 8% mode and the first flow rate Qp in the oxygen concentration 5% mode. For example, the estimation device (E) may estimate the first flow rates Qp in the oxygen concentration 8% mode and the oxygen concentration 5% mode, and determine that the air pump (231) is normal when the first flow rate Qp in a case where the gas to be treated has an oxygen concentration of 8% is equal to or higher than the set flow rate Q1 and the first flow rate Qp in a case where the gas to be treated has an oxygen concentration of 5% is equal to or higher than the set flow rate Q1.

The estimation device (E) may be provided in the transport refrigeration apparatus (10) not including the air composition adjustment device (100). In this case, the transport refrigeration apparatus (10) includes the estimation device (E) including a pressure adjuster other than the air pump (231), a pressure detector, and the control unit (110).

It has been described that the estimation device (E) is provided in the transport refrigeration apparatus (10) including the air composition adjustment device (100). Alternatively, the estimation device (E) may be provided in the air composition adjustment device (100), or the estimation device (E) may be configured separately from the transport refrigeration apparatus (10) and the air composition adjustment device (100). The control unit (110) of the estimation device (E) may be provided in the transport refrigeration apparatus (10), a server device, a terminal device operated by a user, or the like. The control unit (110) may be configured by two or more physically separated control elements.

It has been described that the estimation device (E) is provided in the transport refrigeration apparatus (10) including the air composition adjustment device (100). Alternatively, the estimation device (E) may be provided in the air composition adjustment device (100). For example, the estimation device (E) may be provided independently.

The above modifications may be applied to the second embodiment.

The embodiments and the modifications have been described above, but it will be understood that various changes can be made to modes and details without departing from the spirit and the scope of the claims. The above-described embodiments, modifications, and other embodiments may be combined or replaced appropriately unless impairing functions of the present disclosure.

The above-described terms "first", "second", "third",... are just used for distinguishing words to which these terms are attached, and do not limit the number or order of the words.

### INDUSTRIAL APPLICABILITY

As described above, the present disclosure is useful for the air composition adjustment device and the refrigeration apparatus.

### REFERENCE SIGNS LIST

1: transport container (container)
5: internal space
6: external space
35: internal fan (fan)
41, 42: ventilation port
45: opening and closing lid
100: Air composition adjustment device
110: Control unit
170: differential pressure sensor (first pressure detector)
180: external pressure sensor (second pressure detector)
200: body unit (composition adjuster)
231a, 231b: conveyor

## Claims

1. An air composition adjustment device that adjusts a composition of air in an internal space (5) of a container (1), the air composition adjustment device comprising:
a composition adjuster (200) that supplies, to the internal space (5), a gas to be treated having a composition different from a composition of external air generated by treating the external air;
a control unit (110) that controls the composition adjuster (200); and
a first pressure detector (170) that detects a pressure in the internal space (5),
wherein the composition adjuster (200) includes a conveyor (231a, 231b) that conveys the external air or the gas to be treated to the internal space (5), and
the control unit (110) evaluates airtightness of the internal space (5) on a basis of a change in the pressure in the internal space (5) caused by operation of the conveyor (231a, 231b).

2. The air composition adjustment device according to claim 1, wherein the control unit (110) obtains an airtightness index that is an index indicating the airtightness of the internal space (5).

3. The air composition adjustment device according to claim 2, wherein the control unit (110) determines the airtightness of the internal space (5) on a basis of the airtightness index.

4. The air composition adjustment device according to claim 2, wherein the control unit (110) determines whether the air composition adjustment device is operable on a basis of the airtightness index.

5. The air composition adjustment device according to claim 4, wherein
the container (1) includes a refrigeration apparatus (10) that cools internal air of the internal space (5), and
the control unit (110) determines whether the refrigeration apparatus (10) is operable on a basis of the airtightness index.

6. The air composition adjustment device according to any one of claims 2 to 5, wherein the first pressure detector (170) includes a differential pressure sensor that detects a differential pressure between the external air and the internal air.

7. The air composition adjustment device according to any one of claims 2 to 5, further comprising
a second pressure detector (180) that detects a pressure of the external air,
wherein the control unit (110) obtains the airtightness index on a basis of detection values of the first pressure detector (170) and the second pressure detector (180).

8. The air composition adjustment device according to any one of claims 2 to 7, wherein the control unit (110) obtains the airtightness index on a basis of the pressure of the internal space (5) in a first period in which the conveyor (231a, 231b) is controlled so as to maintain the pressure of the internal space (5) in a predetermined range.

9. The air composition adjustment device according to claim 8, further comprising
a fan (35) that circulates air in the internal space (5),
wherein the control unit (110) obtains the airtightness index on a basis of the pressure in the internal space (5) during a period in which a wind speed of the fan (35) is in a steady state in the first period.

10. The air composition adjustment device according to claim 8 or 9, wherein
the control unit (110) executes a first mode for introducing the external air into the internal space (5) without changing the composition of the external air, and
the first period is a period during execution of the first mode.

11. The air composition adjustment device according to claim 8 or 9, wherein
the control unit (110) executes a second mode for introducing the gas to be treated into the internal space (5), and
the first period is a period during execution of the second mode.

12. The air composition adjustment device according to claim 11, wherein the control unit (110) obtains the airtightness index on a basis of a flow rate of the gas to be treated that is supplied to the internal space (5).

13. The air composition adjustment device according to any one of claims 2 to 7, wherein the control unit (110) controls the conveyor (231a, 231b) to perform a pressure boosting action of increasing the pressure in the internal space (5), and evaluates the airtightness of the internal space (5) on a basis of a change in the pressure detected by the first pressure detector (170) during the pressure boosting action.

14. The air composition adjustment device according to any one of claims 2 to 7, wherein the control unit (110) controls the conveyor (231a, 231b) to perform a decompression action of reducing the pressure of the internal space (5), and evaluates the airtightness of the internal space (5) on a basis of a change in the pressure detected by the first pressure detector (170) during the decompression action.

15. The air composition adjustment device according to claim 13 or 14, wherein the control unit (110) performs a switching action of switching a plurality of operating modes executed by the air composition adjustment device, and evaluates the airtightness of the internal space (5) on a basis of the change in the pressure detected by the first pressure detector (170) when the operating mode is switched by the switching action.

16. The air composition adjustment device according to claim 15, wherein
the operating mode includes a first mode for introducing the external air into the internal space (5) without changing the composition of the external air, a second mode for introducing the gas to be treated generated by treating the external air into the internal space (5), and a third mode for stopping the operation of the conveyor (231a, 231b), and
the control unit (110) evaluates the airtightness of the internal space (5) on a basis of an increasing change in the pressure detected by the first pressure detector (170) when the second mode is switched to the first mode or the third mode is switched to the first mode.

17. The air composition adjustment device according to claim 15, wherein
the operating mode includes a first mode for introducing the external air into the internal space (5) without changing the composition of the external air, a second mode for introducing the gas to be treated generated by treating the external air into the internal space (5), and a third mode for stopping the operation of the conveyor (231a, 231b), and
the control unit (110) evaluates the airtightness of the internal space (5) on a basis of a decreasing change in the pressure detected by the first pressure detector (170) when the first mode is switched to the third mode or the second mode is switched to the third mode.

18. The air composition adjustment device according to any one of claims 2 to 17, wherein
the container (1) is provided with a ventilation port (41, 42) that causes the internal space (5) to communicate with the external space and an opening and closing lid (45) that adjusts an opening degree of the ventilation port (41, 42), and
the control unit (110) evaluates the opening degree of the ventilation port (41, 42) on a basis of the airtightness index.

19. The air composition adjustment device according to any one of claims 1 to 18, wherein the control unit (110) evaluates the airtightness of the internal space (5) during transportation of the container (1).

20. The air composition adjustment device according to any one of claims 1 to 19, wherein
the control unit (110) obtains the airtightness index that is an index indicating the airtightness of the internal space (5), and
estimates a first flow rate that is a flow rate of gas supplied to the internal space (5) on a basis of the airtightness index and an internal pressure that is the pressure of the internal space (5) during the operation of the conveyor (231a, 231b).

21. The air composition adjustment device according to claim 20, wherein
the conveyor (231a, 231b) includes a first conveyor (231a) that conveys the external air to the internal space (5) and a second conveyor (231b) that conveys the gas to be treated having the composition different from the composition of the external air to the internal space (5), and
the first flow rate is the flow rate of the gas to be treated conveyed to the internal space (5) by the second conveyor (231b).

22. The air composition adjustment device according to claim 21, wherein the control unit (110) estimates the first flow rate on a basis of the airtightness index when the first conveyor (231a) supplies the external air to the internal space (5).

23. The air composition adjustment device according to claim 21 or 22, wherein
the air composition adjustment device (100) executes the first mode for introducing the external air into the internal space (5) without changing the composition of the external air, and the second mode for introducing the gas to be treated into the internal space (5), and
the control unit (110) estimates the first flow rate in a process of sequentially executing the first mode and the second mode.

24. The air composition adjustment device according to any one of claims 20 to 23, wherein the control unit (110) evaluates an abnormality of the conveyor (231a, 231b) on a basis of the first flow rate having been estimated.

25. A refrigeration apparatus comprising:
the air composition adjustment device according to any one of claims 1 to 24; and
a refrigerant circuit (11) that cools the internal space (5).
